(19) Europäisches Patentamt
European Patent Office
Office européen des brevets

(11) EP 4 455 257 A1

(12) **EUROPEAN PATENT APPLICATION**
published in accordance with Art. 153(4) EPC

(43) Date of publication:
**30.10.2024 Bulletin 2024/44**

(21) Application number: **22910759.4**

(22) Date of filing: **28.11.2022**

(51) International Patent Classification (IPC):
***C11D 17/08*** *(2006.01)* ***C11D 3/37*** *(2006.01)*
***C11D 9/22*** *(2006.01)* ***C11D 9/44*** *(2006.01)*

(52) Cooperative Patent Classification (CPC):
**B01J 13/08; C11D 1/83; C11D 3/08; C11D 3/37; C11D 3/40; C11D 3/43; C11D 3/48; C11D 3/50; C11D 9/22; C11D 9/36; C11D 9/44; C11D 17/08; D06M 15/09; D06M 15/285; D06M 23/12**

(86) International application number:
**PCT/JP2022/043647**

(87) International publication number:
**WO 2023/120041 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2021 JP 2021209134**

(71) Applicant: **Kao Corporation**
**Tokyo 103-8210 (JP)**

(72) Inventors:
- **SUZUKI Masahiro**
  **Wakayama-shi, Wakayama 640-8580 (JP)**
- **NAITO Shiori**
  **Wakayama-shi, Wakayama 640-8580 (JP)**
- **TAKUMI Hiroki**
  **Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

# (54) CLEANING AGENT COMPOSITION

(57) Provided are a detergent composition and a method for producing the same, a method for washing a textile product, and a kit for a washing liquid, which prevent silica capsules enclosing a functional agent adsorbed on textile products from being desorbed from the textile products during rinsing in a laundry process of the textile products.

A detergent composition containing the following components (A) and (B) and water,
component (A): a silica capsule enclosing a functional agent, and
component (B): a cationic polymer (excluding those enclosed in the silica capsule of component (A)).

EP 4 455 257 A1

## Description

### Field of the Invention

The present invention relates to a detergent composition containing a capsule enclosing a functional agent.

### Background of the Invention

Products for various applications are formulated with functional agents such as fragrances, sensory agents, moisturizers, bactericides and others. For example, fragrances are used in products such as fabric softeners, laundry detergents, body detergents and others for the purpose of giving scents to the products themselves, clothing, the body and others. In that case, the ability to stably retain the fragrances is required to prevent the scents from disappearing in the products. In order to maintain effects of such functional agents, attempts have been made to encapsulate functional agents in microcapsules and incorporate them into products.

Further, conventionally used microcapsules whose wall materials are resins such as melamine and others may fall under the category of microplastics if rules are revised in light of growing social environmental awareness in the future or the like, and there are concerns about their environmental impact. On the other hand, silica capsules whose wall materials are inorganic compounds do not fall under the category of microplastics, and reduced environmental impact can be expected if those capsules can be incorporated into products.

JP-A 2015-128762 discloses microcapsules obtained by a predetermined production process, the microcapsules each containing, a core containing at least one organic compound, a first shell encapsulating the core and containing silica as a constitutional component thereof, and a second shell encapsulating the first shell and containing silica as a constitutional component thereof, wherein the microcapsules have an average particle size of not less than 0.5 um and not more than 50 μm.

JP-A 2009-504812 discloses an aqueous liquid washing and cleaning agent containing surfactants as well as further usual ingredients of washing and cleaning agents, the agent containing at least one capsule, the capsule containing an active ingredient, an aluminum silicate and a silicic acid in a matrix, the aluminum silicate and the silicic acid being present in a ratio from 1:10 to 10:1.

JP-A 2011-517323 discloses a fragrance carrier system containing an encapsulated fragrance composition, wherein the fragrance composition contains an emulsion of a fragrance compound in an aqueous medium and is encapsulated within a shell containing a silicon-containing material, the shell having a mean diameter size which is lower than 30 micrometers, and a surfactant composition containing the fragrance carrier system.

### Summary of the Invention

The present inventors found out that there is a problem that, in a laundry process of textile products, silica capsules enclosing a functional agent are adsorbed on the textile products during washing, but desorbed from the textile products during rinsing, failing to give a feeling that an effect of the silica capsules enclosing the functional agent is actually exerted (for example, to give off a scent of a fragrance enclosed in the silica capsules) during the use of the textile products (for example, during the wearing of clothing).

In other words, the present invention provides a detergent composition and a method for producing the same, a method for washing a textile product, and a kit for a washing liquid, which prevent silica capsules enclosing a functional agent adsorbed on textile products from being desorbed from the textile products during rinsing in a laundry process of the textile products.

The present invention relates to a detergent composition containing the following components (A) and (B) and water,

component (A): a silica capsule enclosing a functional agent, and
component (B): a cationic polymer (excluding those enclosed in the silica capsule of component (A)).

Further, the present invention relates to a method for washing a textile product including, washing the textile product using a washing liquid obtained by mixing the detergent composition of the present invention with water, and thereafter rinsing the textile product with water.

Further, the present invention relates to a kit for a washing liquid containing, a first agent containing the above component (A) and a second agent containing the above component (B).

Further, the present invention relates to a method for producing a detergent composition including, mixing the above components (A) and (B) with water.

According to the present invention, provided are a detergent composition and a method for producing the same,

a method for washing a textile product, and a kit for a washing liquid, which prevent silica capsules enclosing a functional agent adsorbed on textile products from being desorbed from the textile products during rinsing in a laundry process of the textile products.

Embodiments of the Invention

The reason why the detergent composition, the method for washing a textile product and the kit for a washing liquid of the present invention prevent silica capsules enclosing a functional agent adsorbed on textile products from being desorbed from the textile products during rinsing in a laundry process of the textile products is not wholly certain, but is inferred as follows. It is considered that, during a washing process of textile products, component (A) whose capsule surface is negatively charged and component (B) having a cation group and positively charged interact with each other electrostatically, and these two components are adsorbed on fibers upon forming a complex. Further, component (B) has given adhesiveness as it is a polymer, and the formation of the complex with component (B) imparts given adhesiveness to component (A) not having adhesiveness alone. It is inferred that this is why the desorption of component (A) adsorbed on the textile products is suppressed even if mechanical force due to water flow is applied to the textile products in a rinsing process subsequently performed.

[Detergent composition]

<Component (A)>

The detergent composition of the present invention contains a silica capsule enclosing a functional agent as component (A).

Examples of the silica capsule enclosing a functional agent of component (A) include, for example, a capsule having a shell containing silica as a constituent component and a core enveloped in the shell and containing one or more functional agents.

(Shell)

Examples of component (A) include component (A) having a shell containing silica as a constituent component. The shell of component (A) may be a shell in which part or substantially all of constituent structures are made by using silica as a constituent component. From the viewpoint of suppressing the desorption of silica capsules enclosing a functional agent from textile products during rinsing, silica is preferably produced from a raw material silica such as an alkoxysilane or the like which produces a silanol compound on hydrolysis. From the viewpoint of suppressing the desorption of silica capsules enclosing a functional agent from textile products during rinsing, the shell of component (A) of the present invention is preferably formed by a sol-gel reaction using an alkoxysilane as a precursor. In the present invention, the "sol-gel reaction" means a reaction in which an alkoxysilane goes through a sol or gel state on hydrolysis and polycondensation reactions to form silica of a constituent component of the shell. Specifically, for example, a tetraalkoxysilane is hydrolyzed, a silanol compound produces a siloxane oligomer through a dehydration condensation reaction and an alcohol-elimination condensation reaction, and the dehydration condensation reaction further proceeds to form silica.

Examples of the raw material silica include, for example, at least one selected from the group composed of silicon tetrachloride, tetraalkoxysilanes, alkyl alkoxysilanes, water glass and metal silicates. Among these types of raw material silica, a tetraalkoxysilane or an alkyl alkoxysilane is preferable and a tetraalkoxysilane is more preferable from the viewpoint of suppressing the desorption of silica capsules enclosing a functional agent from textile products during rinsing.

Specific examples of the tetraalkoxysilanes include tetramethoxysilane, tetraethoxysilane and tetrapropoxysilane and others, and tetramethoxysilane and tetraethoxysilane are preferable and tetraethoxysilane is more preferable from the viewpoint of suppressing the desorption of silica capsules enclosing a functional agent from textile products during rinsing.

Specific examples of the alkyl alkoxysilanes include methyltrimethoxysilane, methyltriethoxysilane, ethyltrimethoxysilane, ethyltriethoxysilane, phenyltrimethoxysilane, phenyltriethoxysilane, dimethyldimethoxysilane, methylphenyldimethoxysilane, dimethyldiethoxysilane, diphenyldiethoxysilane, methylphenyldiethoxysilane, ethylphenyldimethoxysilane, diethyldiethoxysilane, ethylphenyldiethoxysilane, trimethylmethoxysilane, trimethylethoxysilane, dimethylphenylethoxysilane, triethylmethoxysilane and triethylethoxysilane and others.

One of them can be used alone or a combination of two or more of them can be used. Further, a condensate of them or the like can also be used.

Further, the shell of the silica capsule of the present invention may contain an inorganic polymer other than

silica as a constituent component in the range that the effects of the present invention are not impaired. In the present invention, the inorganic polymer refers to a polymer containing an inorganic element. Examples of the inorganic polymer include a polymer composed of an inorganic element alone, a polymer whose main chain is composed of an inorganic element alone and which has an organic group as a side chain or a substituent, or the like.

From the viewpoint of suppressing the desorption of silica capsules enclosing a functional agent from textile products during rinsing, the inorganic polymer is preferably a metal oxide containing a metal element or a semimetal element, and further preferably a polymer formed by a reaction similar to the aforementioned sol-gel reaction for silica using a metal alkoxide [$M(OR)_x$] as a precursor. Here, M is a metal or semimetal element, and R is a hydrocarbon group.

Examples of the metal or semimetal element constituting the metal alkoxide include titanium, zirconium, aluminum and zinc or the like.

The shell may have a first shell and a second shell, and component (A) may have the first shell enveloping the core containing one or more functional agents and the second shell enveloping the first shell. In other words, component (A) may have the second shell containing silica as a constituent component, the first shell enveloped in the second shell and containing silica as a constituent component, and the core enveloped in the first shell and containing one or more functional agents. Further, component (A) of the present invention may have a third shell enveloping the second shell and composed of an organic polymeric compound. Such a multi-layer shell can retain functional agents such as fragrances or the like for a long period, and is preferable from the viewpoint of suppressing the desorption of silica capsules enclosing a functional agent from textile products during rinsing.

A thickness of the shell (which is the first shell when component (A) has the first and second shells) is preferably 5 nm or more, and preferably 20 nm or less and more preferably 15 nm or less from the viewpoint of suppressing the desorption of silica capsules enclosing a functional agent from textile products during rinsing. Further, from the viewpoint of suppressing the desorption of silica capsules enclosing a functional agent from textile products during rinsing, the shell (first shell) is preferably a dense layer having as less pores as possible for the long-time retention of an enclosed functional agent.

When component (A) has the second shell, a thickness of the second shell is preferably 10 nm or more and more preferably 20 nm or more, and preferably 100 nm or less and more preferably 80 nm or less from the viewpoint of suppressing the desorption of silica capsules enclosing a functional agent from textile products during rinsing. From the viewpoint of suppressing the desorption of silica capsules enclosing a functional agent from textile products during rinsing, the second shell is preferably of a mesoporous structure, which is a higher order structure in which silica is present not only in a direction along an interface with the first shell but also in a thickness direction.

Here, the "mesoporous structure" in the second shell refers to a structure that a diameter of pores present within the structure (so-called mesopores) falls within the range of preferably more than 2 nm, more preferably 10 nm or more and further preferably 30 nm or more, and preferably 50 nm or less, more preferably 45 nm or less and further preferably 40 nm or less from the viewpoint of suppressing the desorption of silica capsules enclosing a functional agent from textile products during rinsing.

Component (A) has high mechanical strength as the second shell is of the mesoporous structure.

Average thicknesses of the first and second shells of component (A) and pore diameters of the first and second shells can be measured by observation with a transmission electron microscope (TEM). Specifically, thicknesses of the first shell and the second shell and pore diameters of the first shell and the second shell are actually measured on a photograph under observation with a transmission electron microscope. This operation is performed by changing a field of view five times. Distributions of the thicknesses and the pore diameters of the first shell and the second shell are determined from the obtained data. A magnification of the transmission electron microscope is 10,000 to 100,000 times as a guide, but is appropriately adjusted depending on a size of component (A). Here, as the transmission electron microscope (TEM), for example, the trade name "JEM-2100" (manufactured by JEOL Ltd.) can be used.

(Core)

The core of component (A) of the present invention contains one or more functional agents. The functional agents may be, for example, oil-soluble liquids. When a fragrance is used as such a functional agent, component (A) encloses the fragrance inside the shell, so that when the shell is broken, the fragrance is released and gives off a scent.

Examples of the functional agents include, for example, one or more selected from a fragrance, a fragrance precursor, an oil agent, an antioxidant, a cooling sensation agent, a warming sensation agent, an antibacterial agent, a dye, a colorant, an ultraviolet absorber, a silicone, a solvent and an oil-soluble polymer, further one or more selected from a fragrance, a fragrance precursor, an oil agent, an antioxidant, a cooling sensation agent, a warming sensation agent, an antibacterial agent, an ultraviolet absorber and a solvent, and further one or more selected from a fragrance and a fragrance precursor. Further, the functional agents may be one or more selected from a skincare component such as a moisturizer or the like, a cosmetic oil, an antiseptic, an antioxidant, an insecticidal component and an insect-repellant component.

Examples of the fragrance include, for example, γ-undecalactone, 2-cyclohexylidene-2-phenylacetonitrile, damascenones, δ-damascone, α-methyl-β-(p-t-butylphenyl)-propionaldehyde, β-ionone, myrrh aldehyde, ethyl tricyclo[5.2.1.0-2,6]decane-2-carboxylate, citronellol, geraniol, α-ionone, patchouli alcohol, 6,7-dihydro-1,1,2,3,3-pentamethyl-4(5H)-indanone, methyl dihydrojasmonate, hexyl cinnamic aldehyde, amyl cinnamic aldehyde, allyl cyclohexyl propionate, dimethylbenzyl carbinyl butyrate, tricyclodecenyl propionate, amyl salicylate, γ-methylionone, α-damascone, β-damascone, Nerolin Yara Yara, phenylhexanol, 2-methyl-4-(2,2,3-trimethyl-3-cyclopenten-1-yl)-2-buten-1-ol, dodecahydro-3a,6,6,9a-tetramethylnaphtho[2,1-b]furan, γ-nonalactone, methyl β-naphthyl ketone, eugenol, Lyral, dimethyl benzyl carbinyl acetate, iso-damascone, 2-cyclohexylidene-2-phenylacetonitrile, γ-decalactone, α-methyl-3,4-methylenedioxyhydrocinnamicaldehyde, 7-methyl-3,5-dihydro-2H-benzodioxepinon, tricyclodecenyl acetate (tricyclodecenyl acetate), tricyclodecenyl propionate, allyl 2-pentyloxy glycolate, 1-(2-tert-butylcyclohexyloxy)-2-butanol, citronellyloxyacetaldehyde, indole, 4-methyl-3-decen-5-ol, para-menthane-8-thiol-3-one, 3-(para-tert-butylphenyl)-propanal, ethyl cinnamate, 5-methyl-3-heptanone oxime, methyl anthranilate, terpineol, β-caryophyllene, citronellyl acetate, geranyl acetate, neryl acetate, p,t-butylcyclohexyl acetate, o,t-butylcyclohexyl acetate, tetrahydrogeraniol, 2-isobutyl-4 hydroxy-4-methyltetrahydropyranol (Florosa), α-dynascone, cis-jasmone, bicyclo[3.2.1]octan-8-one-1,5-dimethyl-oxime, 2,4-dimethyl-4,4α,5,9β-tetrahydroindeno[1,2-d]-m-dioxin, 3-(para-ethylphenyl)-2,2-dimethylpropanal, ethyl-2-tert-butylcyclohexylcarbonate, hexyl benzoate, 4-acetoxy-3-amyltetrahydropyran, dodecyl aldehyde, dihydro-β-ionone, methyl cyclooctyl carbonate, ethyl methylphenylglycidate, isoeugenol, diphenyl oxide, 2,2,5-trimethyl-5-pentylcyclopentanone, thymol, nerolin bromelia, 5,6-dimethyl-8-isopropenyl, bicyclo[4,4,0]-1-decen-3-one, 3-(4-isopropylphenyl)-propanal, 4-isopropylcyclohexanemethanol, methyl methyl anthranilate, dodecanenitrile 3-dodecenal, octanal, nonanal, decanal, lilial, p,t-butylhydrocinnamic aldehyde, dimethyl tetrahydrobenzaldehyde, hexyl acetate, linalyl acetate, terpinyl acetate, allyl caproate, hexyl salicylate, benzyl salicylate, cyclohexyl salicylate, cis-3-hexenyl salicylate, methyl dihydrojasmonate, cyclamen aldehyde, limonene, linalool, tetrahydrolinalool, dihydromyrcenol, methyl β-naphthyl ketone, Iso E Super, cedryl methyl ether, Javanol (manufactured by Givaudan), ambroxane, 1,8-cineole, geranyl nitrile, citronellyl nitrile, 11-oxa-16-hexadecanolide (Musk R1, manufactured by Givaudan), ethylene brassylate, ethylene dodecanedioate, cashmeran, cyclopentadecanolide, cyclohexadecanolide, ambrettolide or the like. The fragrance may be a fragrance composition containing multiple fragrances of these.

Examples of the fragrance precursor include, for example, a compound which releases a fragrance component in response to water, or the like. Specific examples include a silicic acid ester compound having an alkoxy component derived from a fragrance alcohol, a fatty acid ester compound having an alkoxy component derived from a fragrance alcohol, an acetal compound or a hemiacetal compound obtained by a reaction of a carbonyl component derived from a fragrance aldehyde or a fragrance ketone with an alcohol compound, a Schiff base compound obtained by a reaction of a carbonyl component derived from a fragrance aldehyde or a fragrance ketone with a primary amine compound, or a hemiaminal compound or a hydrazone compound obtained by a reaction of a carbonyl component derived from a fragrance aldehyde or a fragrance ketone with a hydrazine compound.

Further, examples of another form of the fragrance precursor include a compound which releases a fragrance component in response to light. Examples include, for example, a 2-nitrobenzyl ether compound having an alkoxy component derived from a fragrance alcohol, an α-ketoester compound having a carbonyl component derived from a fragrance aldehyde or a fragrance ketone, or a coumaric acid ester compound having an alkoxy component derived from a fragrance alcohol. These fragrance precursors may be used as polymers such as, for example, reaction products obtained by reactions of some carboxy groups of polyacrylic acid with fragrance alcohols, and others. Among these, a silicic acid ester compound having an alkoxy component derived from a fragrance alcohol is preferable. One or two or more of these fragrance precursors listed above can be used.

The functional agents have a ClogP value of preferably 2 or more, more preferably 3 or more and further preferably 4 or more, and preferably 30 or less, more preferably 20 or less and further preferably 10 or less. When the functional agents have a ClogP value of 2 or more, an encapsulation rate (hereinafter also referred to as an "enclosure rate") of the functional agents into component (A) is improved. Here, the same applies to the case where the functional agents are fragrance compositions containing multiple fragrances, and when the fragrance compositions have a ClogP value of 2 or more, an encapsulation rate (enclosure rate) of the fragrance compositions into component (A) can be improved.

Here, the ClogP value is a "calculated logP (ClogP)" calculated by the method described in A. Leo, "Comprehensive Medicinal Chemistry," Vol.4, (C. Hansch, P. G. Sammes, J. B. Taylor and C. A. Ramsden, Eds.), p. 295, Pergamon Press, 1990, and is a ClogP value calculated by the program CLOGP v4.01. In the case of a fragrance composition containing multiple fragrances, a CLogP value of the fragrance composition can be determined as a sum of CLogP values of the fragrances multiplied by their respective volume ratios in the fragrance composition.

Further, the functional agents have an oil-water interfacial tension of preferably 7 mN/m or more, more preferably 10 mN/m or more and further preferably 13 mN/m or more at 25°C from the viewpoint of the retention of the functional agents. The oil-water interfacial tension of the functional agents can be measured, for example, by the contact angle meter "DropMaster DM-501" (trade name, manufactured by Kyowa Interface Science Co., Ltd.)

A volume average particle size of component (A) is preferably 0.5 um or more, more preferably 0.7 um or more and further preferably 1 um or more, and preferably 50 um or less, more preferably 10 um or less and further preferably 5 um or less from the viewpoint of incorporation into products and the viewpoint of the retention of the functional agents.

Note that, in the present invention, the volume average particle size of component (A) can be measured by the method described in Examples. For example, it can be measured using the laser diffraction/scattering particle size distribution measurement device "LA-960" (trade name, manufactured by HORIBA, Ltd.) In that case, for measurements, a flow cell is used, the medium is water, and the refractive index is set at 1.40-0i. A dispersion liquid containing component (A) is added to the flow cell, measurements are made at a concentration at which a transmittance near 90% is indicated, and an average particle size is determined on a volume basis.

When component (A) has the second shell containing silica as a constituent component, the first shell enveloped in the second shell and containing silica as a constituent component, and the core enveloped in the first shell and containing one or more functional agents, component (A) can be obtained, for example, by a production method including the following steps (1) and (2),

step (1): a step of forming a capsule enclosing the one or more functional agents, in which an organic phase containing the functional agents and a raw material silica (for example, a tetraalkoxysilane) is mixed and emulsified in an aqueous phase containing a surfactant (for example, a cationic surfactant), and a sol-gel reaction is thereafter carried out under an acidic condition to form a shell, and

step (2): a step of forming a capsule having the second shell enveloping the first shell, in which a raw material silica (for example, a tetraalkoxysilane) is further added to a dispersion liquid containing the capsule obtained in step (1), and a sol-gel reaction is carried out.

More specifically, component (A) can be obtained, for example, by a production method including the following steps (1a) and (2a),

step (1a): a step of forming a capsule having the core and the first shell, in which an organic phase containing the one or more functional agents and a tetraalkoxysilane in an amount of 10 mass% or more and 60 mass% or less relative to the functional agents is emulsified in an aqueous phase containing a surfactant (for example, a cationic surfactant), and a sol-gel reaction is carried out under an acidic condition, and

step (2a): a step of forming a capsule having the second shell enveloping the first shell, in which a tetraalkoxysilane is further added to an aqueous dispersion containing the capsule obtained in step (1a), and a sol-gel reaction is carried out in such a manner that an initial pH of the sol-gel reaction of step (2a) is maintained lower than an initial pH of the sol-gel reaction of step (1a),

the production method further including the following step (3a) as necessary,

step (3a): a step of forming a capsule having the third shell, in which a dispersion liquid containing the capsule obtained in step (2a) is mixed with an aqueous solution containing an organic polymeric compound (for example, an anionic synthetic polymeric compound).

Here, the "sol-gel reactions" in steps (1) and (2) and steps (1a) and (2a) are reactions of synthesizing silica of the first and second shells, in which a raw material silica (silica precursor) is polymerized with alcohol elimination through hydrolysis and polycondensation under an acidic condition.

The above production methods can be performed with reference to, for example, JP-A 2015-128762, JP-A 2017-114802 or the like. In the above production methods, component (A) is usually obtained in a state of being dispersed in water. This aqueous dispersion can be used as-is depending on applications, but in some cases, component (A) is separated and used. As a separation method, filtration, centrifugation or the like can be employed.

A proportion of the functional agents in component (A) may be, for example, 5 mass% or more, further 10 mass% or more and further 12 mass% or more, and 50 mass% or less, further 45 mass% or less and further 40 mass% or less.

<Component (B)>

The detergent composition of the present invention contains a cationic polymer as component (B). However, cationic polymers enclosed in component (A) are excluded from component (B).

A weight average molecular weight of component (B) of the present invention is preferably 100,000 or more, more preferably 500,000 or more, further preferably 1,000,000 or more and furthermore preferably 1,500,000 or more, and preferably 5,000,000 or less, more preferably 4,000,000 or less, further preferably 3,000,000 or less, furthermore preferably 2,500,000 or less and furthermore preferably 2,000,000 or less from the viewpoint of suppressing the desorption of silica capsules enclosing a functional agent from textile products during rinsing. The weight average molecular weight

of component (B) can be calculated in terms of polyethylene glycol by GPC (gel permeation chromatography).

From the viewpoint of suppressing the desorption of silica capsules enclosing a functional agent from textile products during rinsing, component (B) is preferably one or more selected from (B1) a polysaccharide derivative having a cation group (hereinafter referred to as component (B1)) and (B2) a cationic polymer obtained by polymerizing an unsaturated monomer having a cation group (hereinafter referred as component (B2)), and more preferably (B2) a cationic polymer obtained by polymerizing an unsaturated monomer having a cation group.

Component (B1) is a polysaccharide derivative having a cation group.

Component (B1) of the present invention is characterized as being a polysaccharide derivative formed in such a manner that a cation group is bonded directly or via a linking group to a group derived by the removal of a hydrogen atom from a hydroxyl group of a polysaccharide or a derivative thereof of a precursor compound of component (B1). Note that the above bonding form in which "a cation group is bonded directly or via a linking group to a group derived by the removal of a hydrogen atom from a hydroxyl group of a polysaccharide or a derivative thereof" does not include a bonding form in which a cation atom of a cation group, e.g., a nitrogen cation, is directly covalently bonded to a group derived by the removal of a hydrogen atom from a hydroxyl group, i.e., an oxygen atom, of a polysaccharide or a derivative thereof.

Examples of the polysaccharide include one or more polysaccharides selected from, for example, cellulose, guar gum and starch from the viewpoint of suppressing the desorption of silica capsules enclosing a functional agent from textile products during rinsing. While component (B1) is a polysaccharide derivative, a polysaccharide derivative can be used as a precursor compound for obtaining this. In other words, component (B1) may be a derivative of a polysaccharide derivative. Examples of the polysaccharide derivative of the precursor compound of component (B1) include a polysaccharide derivative formed in such a manner that a hydroxyalkyl group with 1 or more and 4 or less carbons substitutes for part or all of the hydrogen atoms of the hydroxyl groups of a polysaccharide of the above (hereinafter also referred to as the hydroxyalkyl-substitution species). The hydroxyalkyl group with 1 or more and 4 or less carbons is preferably a hydroxyalkyl group with 2 or more and 4 or less carbons from the viewpoint of suppressing the desorption of silica capsules enclosing a functional agent from textile products during rinsing. Examples of the hydroxyalkyl group with 2 or more and 4 or less carbons include, for example, one or more groups selected from a hydroxyethyl group, a hydroxypropyl group and a hydroxybutyl group, and one or more groups selected from a hydroxyethyl group and a hydroxypropyl group are preferable from the viewpoint of suppressing the desorption of silica capsules enclosing a functional agent from textile products during rinsing. Component (B1) may be a polysaccharide derivative formed in such a manner that a cation group is introduced into one or more polysaccharides selected from cellulose, guar gum and starch or a polysaccharide derivative selected from their hydroxyalkyl-substitution species.

Examples of the polysaccharide derivative having a cation group of component (B1) include a polysaccharide derivative formed in such a manner that a cation group is bonded via a linking group [hereinafter referred to as linking group (1)], which is an alkylene group with 1 or more and 4 or less carbons which may include a hydroxyl group, to a group derived by the removal of a hydrogen atom from a hydroxyl group of the precursor compound of component (B1), which is a polysaccharide or a derivative thereof and preferably the above hydroxyalkyl-substitution species.

The cation group is preferably a group including a nitrogen cation and more preferably a quaternary ammonium group from the viewpoint of suppressing the desorption of silica capsules enclosing a functional agent from textile products during rinsing.

Linking group (1) is an alkylene group with 1 or more and 4 or less carbons which may include a hydroxyl group. Examples of the alkylene group with 1 or more and 4 or less carbons include one or more alkylene groups selected from a linear alkylene group with 1 or more and 4 or less carbons which may include a hydroxyl group and a branched alkylene group with 1 or more and 4 or less carbons which may include a hydroxyl group.

When the cation group is a quaternary ammonium group, examples of three hydrocarbon groups bonded to the quaternary ammonium group other than linking group (1) each independently include a linear or branched hydrocarbon group with 1 or more and 4 or less carbons. Examples of the linear hydrocarbon group with 1 or more and 4 or less carbons include a group selected from a methyl group, an ethyl group, an n-propyl group and an n-butyl group. Examples of the branched hydrocarbon group with 1 or more and 4 or less carbons include a group selected from an isopropyl group, a sec-butyl group, a tert-butyl group and an isobutyl group. The linear hydrocarbon group with 1 or more and 4 or less carbons is preferably a methyl group or an ethyl group from the viewpoint of suppressing the desorption of silica capsules enclosing a functional agent from textile products during rinsing.

Examples of a counterion of the quaternary ammonium group include one or more counterions selected from an alkyl sulfate ion with 1 or more and 3 or less carbons, a sulfate ion, a phosphate ion, a fatty acid ion with 1 or more and 3 or less carbons and a halide ion. Among these, one or more selected from an alkyl sulfate ion with 1 or more and 3 or less carbons, a sulfate ion and a halide ion are preferable and a halide ion is more preferable from the viewpoints of ease of production, the availability of raw materials, and suppressing the desorption of silica capsules enclosing a functional agent from textile products during rinsing. Examples of the halide ion include one or more selected from a fluoride ion, a chloride ion, a bromide ion and an iodide ion. One or more selected from a chloride ion and a bromide

ion are preferable and a chloride ion is more preferable from the viewpoints of the solubility in water and chemical stability of the polysaccharide derivative of component (B1), and suppressing the desorption of silica capsules enclosing a functional agent from textile products during rinsing. Note that the quaternary ammonium group may have only one counterion or two or more counterions.

A degree of substitution of a cation group (degree of cationization) of the polysaccharide derivative having a cation group of component (B1) is preferably 0.001 or more, more preferably 0.01 or more, further preferably 0.1 or more and furthermore preferably 0.5 or more, and preferably 1.5 or less, more preferably 1.4 or less and further preferably 1.3 or less from the viewpoint of suppressing the desorption of silica capsules enclosing a functional agent from textile products during rinsing.

Component (B1) may have a hydrocarbon group with 1 or more and 18 or less carbons. In other words, component (B1) may be a polysaccharide derivative having both a cation group and a hydrocarbon group with 1 or more and 18 or less carbons.

Examples of the polysaccharide derivative having a hydrocarbon group with 1 or more and 18 or less carbons in component (B1) include a polysaccharide derivative formed in such a manner that a hydrocarbon group with 1 or more and 18 or less carbons is bonded directly or via a linking group [hereinafter referred to as linking group (2)] to the polysaccharide or derivative thereof of the precursor compound of component (B1).

Examples of the above linking group (2) include one or more groups selected from an alkyleneoxy group with 1 or more and 3 or less carbons which may have a hydroxy group, a polyoxyalkylene group having an alkylene group with 1 or more and 3 or less carbons, a carbonyl group, a carbonyloxy group and an oxycarbonyl group. Linking group (2) may be one linking group or a combination of multiple linking groups of the above. Further, one or multiple linking groups may be included in the polysaccharide derivative.

In the present invention, when the above hydrocarbon group is linked to an oxygen atom of linking group (2), the carbon number of the above hydrocarbon group of component (B1) represents a carbon number of the above hydrocarbon group bonded to the oxygen atom. When the above hydrocarbon group is linked via a carbonyl group, a structure in which an acyl group is bonded is formed, and the carbon number of the above hydrocarbon group of component (B1) in this case represents a carbon number of the acyl group. Similarly, when the above hydrocarbon group is linked via a carbonyloxy group and an oxycarbonyl group, carbon numbers of them are included. When a 1,2-epoxyalkane is used for introducing a hydrocarbon group into a polysaccharide or a polysaccharide derivative, a carbon number of an aliphatic hydrocarbon group bonded to the ether group derived from the epoxy group is used. The epoxy group portion is linking group (2). For example, when a hydrocarbon group is introduced into a polysaccharide or a polysaccharide derivative using 1,2-epoxytetradecane, the hydrocarbon group has 12 carbons. In other words, the oxyethylene group as linking group (2) is bonded to a hydroxyl group of the polysaccharide or the polysaccharide derivative, and the alkyl group with 12 carbons (dodecyl group) is bonded via the linking group. The same applies to the case where an alkyl glycidyl ether is used.

Examples of the polysaccharide derivative having a cation group and a hydrocarbon group with 1 or more and 18 or less carbons in component (B1) include a polysaccharide derivative formed in such a manner that a hydrocarbon group with 1 or more and 18 or less carbons is bonded, directly or via linking group (2) and preferably via linking group (2) from the viewpoint of suppressing the desorption of silica capsules enclosing a functional agent from textile products during rinsing, to an oxygen atom derived by the removal of a hydrogen atom from part or all of the hydroxyl groups of the above hydroxyalkyl-substitution species.

The hydrocarbon group with 1 or more and 18 or less carbons has preferably 2 or more, further preferably 4 or more, further preferably 6 or more, furthermore preferably 8 or more and furthermore preferably 10 or more, and preferably 16 or less and more preferably 14 or less carbons from the viewpoint of suppressing the desorption of silica capsules enclosing a functional agent from textile products during rinsing. The hydrocarbon group with 1 or more and 18 or less carbons is preferably an aliphatic hydrocarbon group from the viewpoint of suppressing the desorption of silica capsules enclosing a functional agent from textile products during rinsing.

A degree of substitution of a hydrocarbon group with 1 or more and 18 or less carbons (degree of alkylation) of the polysaccharide derivative having a hydrocarbon group with 1 or more and 18 or less carbons of component (B1) is preferably 0.0001 or more, more preferably 0.001 or more and further preferably 0.01 or more, and preferably 0.4 or less, more preferably 0.2 or less, further preferably 0.1 or less and furthermore preferably 0.05 or less from the viewpoint of suppressing the desorption of silica capsules enclosing a functional agent from textile products during rinsing.

In the present invention, the degree of substitution of a hydrocarbon group with 1 or more and 18 or less carbons and the degree of substitution of a cation group of component (B1) each mean a number of substitution of the group per constituent monosaccharide unit, in other words, a molar average degree of substitution (MS). For example, when the polysaccharide is cellulose, a "degree of substitution of a group" means an average molar number of the group introduced into 1 mole of the anhydroglucose unit. The degree of substitution of a cation group and the degree of substitution of a hydrocarbon group with 1 or more and 18 or less carbons of the polysaccharide derivative are determined by the respective methods described in Examples.

While component (B1) can also have an anion group, a ratio of a degree of substitution of an anion group to a total of the degree of substitution of a cation group and the degree of substitution of a hydrocarbon group with 1 or more and 18 or less carbons in component (B1), degree of substitution of anion group/(degree of substitution of cation group + degree of substitution of hydrocarbon group with 1 or more and 18 or less carbons), is preferably 3 or less, more preferably 1.7 or less, further preferably 1.5 or less, furthermore preferably 1 or less, furthermore preferably 0.5 or less and furthermore preferably 0.1 or less, and may be 0 or more and is preferably 0 from the viewpoint of suppressing the desorption of silica capsules enclosing a functional agent from textile products during rinsing.

A weight average molecular weight of component (B1) of the present invention is preferably 100,000 or more, more preferably 500,000 or more, further preferably 1,000,000 or more and furthermore preferably 1,500,000 or more, and preferably 5,000,000 or less, more preferably 4,000,000 or less, further preferably 3,000,000 or less, furthermore preferably 2,500,000 or less and furthermore preferably 2,000,000 or less from the viewpoint of suppressing the desorption of silica capsules enclosing a functional agent from textile products during rinsing.

The weight average molecular weight of component (B1) can be calculated in terms of polyethylene glycol by GPC (gel permeation chromatography) as above.

Component (B2) is a cationic polymer obtained by polymerizing an unsaturated monomer having a cation group.

From the viewpoint of suppressing the desorption of silica capsules enclosing a functional agent from textile products during rinsing, component (B2) is preferably a cationic polymer obtained by polymerizing an unsaturated monomer containing one or more cationic monomers (b21) selected from a compound represented by the following general formula (b21), an acid salt thereof and a quaternary salt thereof,

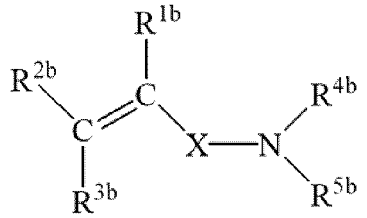

(b21)

wherein in the general formula (b21), $R^{1b}$ and $R^{2b}$ each independently represent a hydrogen atom or a methyl group, $R^{3b}$ represents -C(O)OM (M is a hydrogen atom or an alkali metal atom) or a hydrogen atom, X represents -C(O)O-$R^{6b}$-, -C (O)N$R^{7b}$-$R^{8b}$- or -$CH_2$-, $R^{4b}$ represents a group represented by the general formula (b21') when X is - $CH_2$-,

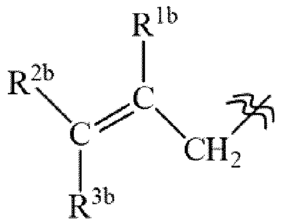

(b21')

and represents an alkyl group with 1 or more and 3 or less carbons or a hydroxyalkyl group with 1 or more and 3 or less carbons when X is otherwise, $R^{5b}$ represents an alkyl group with 1 or more and 3 or less carbons, a hydroxyalkyl group with 1 or more and 3 or less carbons or a hydrogen atom, $R^{6b}$ and $R^{8b}$ each independently represent an alkylene group with 1 or more and 4 or less carbons, and $R^{7b}$ represents a hydrogen atom or an alkyl group with 1 or more and 3 or less carbons.

Examples of a compound of the general formula (b21) in which X is -C(O)O-$R^{6b}$- of the compound represented by the general formula (b21) include one or more selected from N,N-dimethylaminomethyl acrylate (or methacrylate), N,N-dimethylaminoethyl acrylate (or methacrylate), N,N-dimethylaminopropyl acrylate (or methacrylate), N,N-dimethylaminobutyl acrylate (or methacrylate), N,N-diethylaminomethyl acrylate (or methacrylate), N,N-diethylaminoethyl acrylate (or methacrylate), N,N-diethylaminopropyl acrylate (or methacrylate) and N,N-diethylaminobutyl acrylate (or methacrylate).

Further, examples of a compound of the general formula (b21) in which X is -C(O)N$R^{7b}$-$R^{8b}$- of the compound represented by the general formula (b21) include one or more selected from N,N-dimethylaminopropyl acrylic acid (or methacrylic acid) amide, N,N-dimethylaminomethyl acrylic acid (or methacrylic acid) amide, N,N-dimethylaminoethyl acrylic acid (or methacrylic acid) amide and N,N-dimethylaminobutyl acrylic acid (or methacrylic acid) amide.

Further, when X in the general formula (b21) is - $CH_2$-, $R^{4b}$ is a group represented by the above general formula

(b21'). Examples of such a compound include diallylamine or the like.

The compound represented by the general formula (b21) can be used in the form of an acid salt or a quaternary salt thereof. Examples of the acid salt include, for example, a salt formed by the neutralization of the compound represented by the general formula (b21) with an inorganic acid such as hydrochloric acid or sulfuric acid or the like or any kind of organic acid. Examples of the quaternary salt include a quaternary salt obtained by quaternizing the compound represented by the general formula (b21) with an alkyl halide with 1 or more and 3 or less carbons or an alkyl sulfate with 1 or more and 3 or less carbons or the like. Examples of the quaternary salt include a quaternary salt having a halogen ion such as a chloride ion, a bromide ion, an iodide ion or the like or an alkyl sulfate ion with 1 or more and 3 or less carbons as a counterion. From the viewpoint of suppressing the desorption of silica capsules enclosing a functional agent from textile products during rinsing, the quaternary salt is preferably N,N,N-trimethyl-N-(2-methacryloyloxyethyl) ammonium chloride, N,N-dimethyl-N-ethyl-N-(2-methacryloyloxyethyl) ammonium ethyl sulfate or diallyldimethylammonium chloride. These compounds are sold, for example, under the trade names QDM or MOEDES from MRC UNITEC Co., Ltd.

Component (B2) of the present invention can contain monomer (b22) derived from a polymerizable vinyl compound copolymerizable with cationic monomer (b21) other than cationic monomer (b21).

From the viewpoint of suppressing the desorption of silica capsules enclosing a functional agent from textile products during rinsing, monomer (b22) is preferably a compound represented by the following general formula (b22),

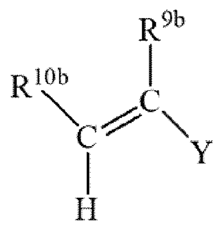

(b22)

wherein in the formula, $R^{9b}$ and $R^{10b}$ each independently represent a hydrogen atom or an alkyl group with 1 or more and 3 or less carbons, Y represents an aryl group, $-O-C(O)-R^{11b}$, $-C(O)O-(R^{12b}-O)_n-R^{13b}$ or $-C(O)NR^{14b}-R^{15b}$, $R^{11b}$, $R^{13b}$ and $R^{15b}$ each independently represent a hydrogen atom, a linear, branched or cyclic alkyl group or alkenyl group with 1 or more and 22 or less carbons, or an arylalkyl group with 6 or more and 14 or less carbons in total, $R^{12b}$ represents an alkylene group with 2 or 3 carbons, n represents a number of 0 or more and 50 or less, and $R^{14b}$ represents a hydrogen atom or an alkyl group with 1 or more and 3 or less carbons.

When Y in the general formula (b22) is $-C(O)O-(R^{12b}-O)_n-R^{13b}$, $R^{13b}$ is preferably an alkyl group with 8 or more and further 10 or more, and 18 or less and further 14 or less carbons from the viewpoint of suppressing the desorption of silica capsules enclosing a functional agent from textile products during rinsing. $R^{12b}$ is preferably an ethylene group. n is a number of 0 or more, and preferably 20 or less and more preferably 10 or less from the viewpoint of suppressing the desorption of silica capsules enclosing a functional agent from textile products during rinsing. n is further preferably 0 from the viewpoint of suppressing the desorption of silica capsules enclosing a functional agent from textile products during rinsing.

From the viewpoint of suppressing the desorption of silica capsules enclosing a functional agent from textile products during rinsing, specific examples of the compound represented by the general formula (b22) of monomer (b22) are preferably one or more selected from an acrylic acid alkyl ester or a methacrylic acid alkyl ester having an alkyl group with 1 or more and preferably 8 or more, and 22 or less and preferably 14 or less carbons, and acrylamide.

From the viewpoint of suppressing the desorption of silica capsules enclosing a functional agent from textile products during rinsing, component (B2) is preferably a cationic polymer selected from (1) a cationic homopolymer obtained by polymerizing a compound selected from the compound represented by the general formula (b21), an acid salt thereof and a quaternary salt thereof, specifically, a monomer selected from N,N-diallylmethylamine, N,N-dimethylaminoethyl methacrylate, N,N-dimethylaminomethyl methacrylate, N,N-dimethylaminoethyl acrylate, N,N-dimethylaminomethyl acrylate, acid salts of these and quaternary salts of these, and (2) a cationic copolymer obtained by copolymerizing one or more compounds selected from the compound represented by the general formula (b21), an acid salt thereof and a quaternary salt thereof, specifically, a monomer selected from N,N-diallylmethylamine, N,N-dimethylaminoethyl methacrylate, N,N-dimethylaminomethyl methacrylate, N,N-dimethylaminoethyl acrylate, N,N-dimethylaminomethyl acrylate, acid salts of these and quaternary salts of these, and one or more compounds selected from the compound represented by the general formula (b22), specifically, an acrylic acid alkyl ester and a methacrylic acid alkyl ester having an alkyl group with 8 or more and 14 or less carbons, and acrylamide.

When the cationic polymer of component (B2) does not contain monomer (b22), component (B2) may be a cationic homopolymer obtained by polymerizing cationic monomer (b21).

When the cationic polymer of component (B2) contains cationic monomer (b21) and monomer (b22) as constituent monomers, a mass ratio of a proportion of monomer (b21) to a proportion of monomer (b22) in constituent monomers of component (B2), (b21)/(b22), is preferably 20/80 or more, more preferably 40/60 or more and further preferably 50/50 or more, and preferably 100/0 or less, more preferably 90/10 or less, further preferably 80/20 or less, furthermore preferably 70/30 or less and furthermore preferably 60/40 or less from the viewpoint of suppressing the desorption of silica capsules enclosing a functional agent from textile products during rinsing.

When the cationic polymer of component (B2) contains monomer (b22), a total proportion of monomer (b21) and monomer (b22) in all constituent monomers of component (B2) is preferably 80 mass% or more, more preferably 90 mass% or more and further preferably 95 mass% or more, and preferably 100 mass% or less and may be 100 mass% from the viewpoint of suppressing the desorption of silica capsules enclosing a functional agent from textile products during rinsing.

A weight average molecular weight of component (B2) is preferably 100,000 or more, more preferably 500,000 or more, further preferably 1,000,000 or more and furthermore preferably 1,500,000 or more, and preferably 5,000,000 or less, more preferably 4,000,000 or less, further preferably 3,000,000 or less, furthermore preferably 2,500,000 or less and furthermore preferably 2,000,000 or less from the viewpoint of suppressing the desorption of silica capsules enclosing a functional agent from textile products during rinsing.

For this weight average molecular weight, values measured by gel permeation chromatography (GPC) are used. As the eluent, any of water, an alcohol, chloroform, dimethylformamide, tetrahydrofuran, acetonitrile and a liquid made of a combination of these solvents is used, and when the polymer of component (B2) is relatively hydrophilic, polyethylene glycol is used as the standard product, and a molecular weight in terms of the above polyethylene glycol is used, and when the polymer of component (B2) is relatively hydrophobic, polystyrene is used as the standard product, and a molecular weight in terms of the above polystyrene is used.

<Composition and others>

From the viewpoints of making a scent effect more likely to be felt and suppressing the desorption of silica capsules enclosing a functional agent from textile products during rinsing, in the detergent composition of the present invention, a content of component (A) in terms of an enclosed functional agent is preferably 0.02 mass% or more, more preferably 0.05 mass% or more, further preferably 0.1 mass% or more and furthermore preferably 0.2 mass% or more, and preferably 2 mass% or less, more preferably 1 mass% or less and further preferably 0.5 mass% or less in the detergent composition. Note that, in the present invention, a content of component (A) is expressed in terms of an effective content, i.e., an enclosed functional agent.

From the viewpoint of suppressing the desorption of silica capsules enclosing a functional agent from textile products during rinsing, the detergent composition of the present invention contains component (B) in an amount of preferably 0.004 mass% or more, more preferably 0.008 mass% or more and further preferably 0.01 mass% or more, and preferably 0.1 mass% or less, more preferably 0.08 mass% or less and further preferably 0.05 mass% or less in the detergent composition.

In the detergent composition of the present invention, a mass ratio of a content of component (A) in terms of an enclosed functional agent to a content of component (B), (A)/(B), is preferably 20 or more, more preferably 25 or more and further preferably 30 or more, and preferably 100 or less, more preferably 75 or less, further preferably 50 or less, furthermore preferably 45 or less, furthermore preferably 40 or less and furthermore preferably 35 or less from the viewpoint of suppressing the desorption of silica capsules enclosing a functional agent from textile products during rinsing.

The detergent composition of the present invention can further contain the following component (C) from the viewpoint of suppressing the desorption of silica capsules enclosing a functional agent from textile products during rinsing, provided that surfactants enclosed in component (A) are excluded from component (C),

component (C): a surfactant.

Component (C) is preferably one or more surfactants selected from (C1) an anionic surfactant (hereinafter referred to as component (C1)) and (C2) a nonionic surfactant (hereinafter referred to as component (C2)) from the viewpoints of the dispersion stability of component (A) or other base agents in the composition, or detergency when the composition is used as a detergent, and suppressing the desorption of silica capsules enclosing a functional agent from textile products during rinsing.

From the viewpoint of suppressing the desorption of silica capsules enclosing a functional agent from textile products during rinsing, examples of the anionic surfactant of component (C1) include one or more selected from a sulfonic acid having a hydrocarbon group and a salt thereof, a sulfate having a hydrocarbon group and a salt thereof, and a carboxylic acid and a salt thereof, and one or more selected from a sulfonate having a hydrocarbon group and a carboxylate are preferable. The hydrocarbon groups may be alkyl groups or alkenyl groups. The hydrocarbon groups

have preferably 7 or more, more preferably 9 or more and further preferably 11 or more, and preferably 22 or less, more preferably 20 or less and further preferably 18 or less carbons from the viewpoint of suppressing the desorption of silica capsules enclosing a functional agent from textile products during rinsing. Examples of the salts include monovalent metal salts such as sodium salts, potassium salts or the like, divalent metal salts such as magnesium salts or the like, ammonium salts, or organic amine salts such as monoethanolamine salts, diethanolamine salts, triethanolamine salts or the like, and from the viewpoint of suppressing the desorption of silica capsules enclosing a functional agent from textile products during rinsing, sodium salts are preferable.

From the viewpoint of suppressing the desorption of silica capsules enclosing a functional agent from textile products during rinsing, component (C1) is preferably one or more anionic surfactants selected from the following components (c1-1) to (c1-5),

component (c1-1): a sulfonic acid or a salt thereof represented by the following general formula (c1-1),

$$R^1\text{-B-}SO_3M \qquad (c1\text{-}1)$$

wherein in the formula (c1-1), $R^1$ represents an alkyl group or an alkenyl group with 3 or more and 21 or less carbons, B represents a benzene ring, M represents a hydrogen atom, an alkali metal, an alkaline earth metal (1/2 atom), ammonium or an organic ammonium, and the sulfonic acid group is bonded in an ortho, meta or para position relative to $R^1$ bonded to B,
component (c1-2): a salt of an internal olefin sulfonic acid with 14 or more and 24 or less carbons,
component (c1-3): a salt of a fatty acid with 8 or more and 20 or less carbons,
component (c1-4): a sulfate or a salt thereof represented by the following general formula (c1-4),

$$R^2\text{-O-}[(PO)_m/(EO)_n]\text{-}SO_3M \qquad (c1\text{-}4)$$

wherein in the formula (c1-4), $R^2$ represents an alkyl group or an alkenyl group with 8 or more and 22 or less carbons, in which a carbon atom bonded to the oxygen atom is a primary carbon atom, PO represents propyleneoxy group, EO represents ethyleneoxy group, EO and PO may be bonded in blocks or at random, / is a sign indicating that PO and EO are bonded in any order, m and n are average numbers of added moles, where m is 0 or more and 5 or less and n is 0 or more and 16 or less, and M represents a hydrogen atom, an alkali metal, an alkaline earth metal (1/2 atom), ammonium or an organic ammonium, and
component (c1-5): an $\alpha$-sulfo fatty acid ester or a salt thereof represented by the following general formula (c1-5),

$$R^3\text{-CH}(SO_3M)COOR^4 \qquad (c1\text{-}5)$$

wherein in the formula (c1-5), $R^3$ represents an alkyl group or an alkenyl group with 6 or more and 20 or less carbons, $R^4$ represents an alkyl group with 1 or more and 6 or less carbons, and M represents a hydrogen atom, an alkali metal, an alkaline earth metal (1/2 atom), ammonium or an organic ammonium.

In the formula (c1-1), $R^1$ has 3 or more, preferably 5 or more, more preferably 6 or more and further preferably 7 or more, and 21 or less, preferably 20 or less, more preferably 19 or less and further preferably 18 or less carbons from the viewpoint of suppressing the desorption of silica capsules enclosing a functional agent from textile products during rinsing.

In the formula (c1-1), M is preferably an alkali metal or an organic ammonium, and more preferably sodium from the viewpoint of suppressing the desorption of silica capsules enclosing a functional agent from textile products during rinsing.

Note that a content of component (c1-1) in the detergent composition of the present invention is based on an amount of a compound in terms of a sodium salt.

Specific examples of component (c1-1) include an alkyl benzene sulfonic acid, a cumene sulfonic acid or the like.

The internal olefin sulfonate of component (c1-2) has 14 or more, preferably 16 or more and more preferably 18 or more, and 24 or less, more preferably 22 or less and further preferably 20 or less carbons from the viewpoint of suppressing the desorption of silica capsules enclosing a functional agent from textile products during rinsing.

Component (c1-2) also contains, in addition to internal olefin sulfonates, hydroxy alkane sulfonates or $\alpha$-olefin sulfonates produced during synthesis.

Examples of the salt of component (c1-2) include one or more selected from a hydrogen atom, an alkali metal salt such as sodium, potassium or the like, an alkaline earth metal salt such as calcium, magnesium or the like, and an organic ammonium salt (for example, an alkanol ammonium salt such as monoethanolammonium, diethanolammonium, triethanolammonium or the like), and from the viewpoint of suppressing the desorption of silica capsules enclosing a

functional agent from textile products during rinsing, one or more selected from an alkaline earth metal, and an alkanol ammonium with 2 or more and 6 or less carbons are preferable.

Note that a content of component (c1-2) in the detergent composition of the present invention is based on an amount of a compound in terms of a potassium salt.

The fatty acid of component (c1-3) has 8 or more, preferably 10 or more and more preferably 12 or more, and 20 or less, more preferably 18 or less and further preferably 16 or less carbons from the viewpoint of suppressing the desorption of silica capsules enclosing a functional agent from textile products during rinsing.

Specific examples of component (c1-3) include one or more selected from an octanoic acid salt, a decanoic acid salt, a lauric acid salt, a myristic acid salt, a palmitic acid salt, a stearic acid salt, a coconut fatty acid salt, a palm fatty acid salt and a palm kernel fatty acid salt and others.

In the formula (c1-4), $R^2$ is an alkyl group with preferably 9 or more, more preferably 10 or more and further preferably 12 or more, and preferably 18 or less, more preferably 16 or less and further preferably 14 or less carbons from the viewpoint of suppressing the desorption of silica capsules enclosing a functional agent from textile products during rinsing. $R^2$ is preferably a linear alkyl group from the viewpoint of suppressing the desorption of silica capsules enclosing a functional agent from textile products during rinsing.

In the formula (c1-4), m is preferably 4 or less and more preferably 3 or less from the viewpoint of suppressing the desorption of silica capsules enclosing a functional agent from textile products during rinsing.

In the formula (c1-4), n is preferably 0 or more, more preferably 1 or more, further preferably 2 or more and furthermore preferably 4 or more, and preferably 10 or less, more preferably 8 or less and further preferably 6 or less from the viewpoint of suppressing the desorption of silica capsules enclosing a functional agent from textile products during rinsing.

In the formula (c1-4), M is preferably one or more selected from a hydrogen atom, an alkali metal such as sodium, potassium or the like, an alkaline earth metal (1/2 atom) such as magnesium, calcium or the like, and an organic ammonium from the viewpoint of suppressing the desorption of silica capsules enclosing a functional agent from textile products during rinsing. M is more preferably one or more selected from an alkali metal such as sodium, potassium or the like, and an alkanol ammonium such as monoethanolammonium, diethanolammonium or the like, and further preferably sodium from the viewpoint of suppressing the desorption of silica capsules enclosing a functional agent from textile products during rinsing.

Note that a content of component (c1-4) in the detergent composition of the present invention is based on an amount of a compound in terms of a sodium salt.

From the viewpoint of suppressing the desorption of silica capsules enclosing a functional agent from textile products during rinsing, specific component (c1-4) is preferably a (polyoxypropylene) polyoxyethylene alkyl ether sulfate sodium salt in which the alkyl group has 12 or more and 14 or less carbons, an average number of added moles of propyleneoxy group is 0 or more and 4 or less, and an average number of added moles of ethyleneoxy group is 1 or more and 4 or less. In other words, component (c1-4) is preferably a compound of the general formula (c1-4) in which $R^2$ is an alkyl group with 12 or more and 14 or less carbons, m is 0 or more and 4 or less, n is 1 or more and 4 or less, and M is sodium.

In the formula (c1-5), $R^3$ is an alkyl group with preferably 8 or more and more preferably 10 or more, and preferably 18 or less and more preferably 16 or less carbons from the viewpoint of suppressing the desorption of silica capsules enclosing a functional agent from textile products during rinsing.

In the formula (c1-5), $R^4$ is an alkyl group with 1 or more, and preferably 5 or less and more preferably 4 or less carbons from the viewpoint of suppressing the desorption of silica capsules enclosing a functional agent from textile products during rinsing.

In the formula (c1-5), M is preferably one or more selected from a hydrogen atom, an alkali metal such as sodium, potassium or the like, an alkaline earth metal (1/2 atom) such as magnesium, calcium or the like, and an organic ammonium from the viewpoint of suppressing the desorption of silica capsules enclosing a functional agent from textile products during rinsing. M is more preferably one or more selected from an alkali metal such as sodium, potassium or the like, and an alkanol ammonium such as monoethanolammonium, diethanolammonium or the like, and further preferably sodium from the viewpoint of suppressing the desorption of silica capsules enclosing a functional agent from textile products during rinsing.

Note that a content of component (c1-5) in the detergent composition of the present invention is based on an amount of a compound in terms of a sodium salt.

From the viewpoint of suppressing the desorption of silica capsules enclosing a functional agent from textile products during rinsing, specific component (c1-5) is preferably an $\alpha$-sulfo fatty acid methyl ester sodium salt of the formula (c1-5) in which $R^3$ is an alkyl group with 11 or more and 14 or less carbons and $R^4$ is a methyl group.

From the viewpoint of suppressing the desorption of silica capsules enclosing a functional agent from textile products during rinsing, examples of the nonionic surfactant of component (C2) include one or more selected from a sucrose fatty acid ester, a glycerin fatty acid ester, a sorbitan fatty acid ester, a polyoxyalkylene sorbitan fatty acid ester,

a polyoxyalkylene fatty acid ester, a fatty acid alkanolamide or an alkylene oxide adduct thereof, a polyoxyalkylene alkyl ether, a fatty acid methyl ester alkoxylate, an alkyl glycoside and a glyceryl monoether and others, and among these, one or more selected from a polyoxyalkylene alkyl ether and a fatty acid methyl ester alkoxylate are preferable.

From the viewpoint of suppressing the desorption of silica capsules enclosing a functional agent from textile products during rinsing, examples of component (C2) include a compound represented by the following general formula (c2-1),

$$R^5\text{-}(CO)_xO\text{-}(AO)_y\text{-}R^6 \qquad (c2\text{-}1)$$

wherein $R^5$ is an alkyl group or an alkenyl group with 9 or more and 18 or less carbons, $R^6$ is a hydrogen atom or a methyl group, CO is a carbonyl group, x is a number of 0 or 1, AO is one or more alkyleneoxy groups selected from alkyleneoxy groups with 2 or more and 4 or less carbons, y is an average number of added moles and 3 or more and 50 or less, and when AO includes two or more alkyleneoxy groups, they may be bonded at random or bonded in blocks.

In the formula (c2-1), $R^5$ has 9 or more, preferably 10 or more, more preferably 11 or more and further preferably 12 or more, and 17 or less, preferably 16 or less, more preferably 15 or less and further preferably 14 or less carbons from the viewpoint of suppressing the desorption of silica capsules enclosing a functional agent from textile products during rinsing.

In the formula (c2-1), AO is one or more alkyleneoxy groups selected from alkyleneoxy groups with 2 or more and 4 or less carbons and preferably one or more alkyleneoxy groups selected from ethyleneoxy group and propyleneoxy group from the viewpoint of suppressing the desorption of silica capsules enclosing a functional agent from textile products during rinsing.

In the formula (c2-1), x is a number of 0 or 1 and preferably 0 from the viewpoint of suppressing the desorption of silica capsules enclosing a functional agent from textile products during rinsing.

In the formula (c2-1), y is 3 or more, preferably 5 or more, more preferably 7 or more, further preferably 8 or more, furthermore preferably 9 or more and furthermore preferably 10 or more, and 50 or less, preferably 40 or less, more preferably 30 or less, further preferably 20 or less and furthermore preferably 15 or less from the viewpoint of suppressing the desorption of silica capsules enclosing a functional agent from textile products during rinsing.

Examples of component (C2) include, for example, a compound represented by the general formula (c2-2) below from the viewpoint of suppressing the desorption of silica capsules enclosing a functional agent from textile products during rinsing. This compound is a compound of the above general formula (c2-1) in which AO is ethyleneoxy group and propyleneoxy group.

$$R^7\text{-}O\text{-}(EO)_s\text{-}(PO)_t\text{-}(EO)_r\text{-}H \qquad (c2\text{-}2)$$

wherein in the formula, $R^7$ is an alkyl group or an alkenyl group with 8 or more and 18 or less carbons, EO is ethyleneoxy group, PO is propyleneoxy group, and s, t and r are each an average number of added moles, where s is 0 or more and 30 or less, t is 0.1 or more and 5 or less, and r is 0 or more and 30 or less.

In the formula (c2-2), $R^7$ has 9 or more, preferably 10 or more, more preferably 11 or more and further preferably 12 or more, and 17 or less, preferably 16 or less, more preferably 15 or less and further preferably 14 or less carbons from the viewpoint of suppressing the desorption of silica capsules enclosing a functional agent from textile products during rinsing.

In the formula (c2-2), s is preferably 0 or more, more preferably 1 or more, further preferably 2 or more, furthermore preferably 3 or more, furthermore preferably 5 or more and furthermore preferably 7 or more, and preferably 30 or less, more preferably 25 or less, further preferably 20 or less and furthermore preferably 15 or less from the viewpoint of suppressing the desorption of silica capsules enclosing a functional agent from textile products during rinsing.

In the formula (c2-2), t is preferably 0.1 or more, more preferably 0.5 or more and further preferably 1 or more, and preferably 5 or less, more preferably 4.5 or less and further preferably 4.2 or less from the viewpoint of suppressing the desorption of silica capsules enclosing a functional agent from textile products during rinsing.

In the formula (c2-2), r is preferably 0 or more, more preferably 1 or more, further preferably 2 or more, furthermore preferably 3 or more, furthermore preferably 5 or more and furthermore preferably 7 or more, and preferably 30 or less, more preferably 25 or less, further preferably 20 or less and furthermore preferably 15 or less from the viewpoint of suppressing the desorption of silica capsules enclosing a functional agent from textile products during rinsing.

When the detergent composition of the present invention contains component (C), the composition contains component (C) in an amount of preferably 1 mass% or more, more preferably 2 mass% or more, further preferably 5 mass% or more, furthermore preferably 10 mass% or more and furthermore preferably 15 mass% or more, and preferably 50 mass% or less, more preferably 40 mass% or less, further preferably 35 mass% or less, furthermore preferably 30 mass% or less and furthermore preferably 25 mass% or less from the viewpoints of the dispersion stability of component (A) or other base agents in the composition, or detergency when the composition is used as a detergent, and suppressing

the desorption of silica capsules enclosing a functional agent from textile products during rinsing.

When the detergent composition of the present invention contains components (C1) and (C2) as component (C), a mass ratio of a content of component (C1) to a content of component (C2), (C1)/(C2), is preferably 0.05 or more, more preferably 0.1 or more and further preferably 0.2 or more, and preferably 3 or less, more preferably 2 or less, further preferably 1 or less and furthermore preferably 0.5 or less from the viewpoints of the dispersion stability of component (A) or other base agents in the composition, or detergency when the composition is used as a detergent, and suppressing the desorption of silica capsules enclosing a functional agent from textile products during rinsing.

In the detergent composition of the present invention, a mass ratio of a content of component (C) to a content of component (A) in terms of an enclosed functional agent, (C)/(A), is preferably 10 or more, preferably 20 or more, more preferably 50 or more and further preferably 70 or more, and preferably 200 or less, more preferably 150 or less, further preferably 100 or less and furthermore preferably 80 or less from the viewpoints of the dispersibility of component (A) and suppressing the desorption of silica capsules enclosing a functional agent from textile products during rinsing.

The detergent composition of the present invention can further contain an organic solvent having a hydroxyl group as component (D) from the viewpoints of stably incorporating component (C) and suppressing the desorption of silica capsules enclosing a functional agent from textile products during rinsing. However, organic solvents having a hydroxyl group enclosed in component (A) are excluded from component (D).

Specific examples of component (D) can include the following compounds (D1) to (D6),

(D1) monohydric alcohols with 2 or more and 4 or less carbons such as ethanol, isopropanol and others,

(D2) dihydric or more and hexahydric or less polyhydric alcohols with 2 or more and 8 or less carbons such as ethylene glycol, propylene glycol, butylene glycol, hexylene glycol, glycerin and others,

(D3) glycol ethers with 4 or more and 12 or less carbons such as diethylene glycol, triethylene glycol, tetraethylene glycol, dipropylene glycol, tripropylene glycol and others,

(D4) alkyl (with 1 or more and 10 or less carbons) ethers of dihydric or more and tetrahydric or less polyhydric alcohols such as diethylene glycol monomethyl ether, diethylene glycol monoethyl ether, diethylene glycol monopropyl ether, diethylene glycol monobutyl ether, dipropylene glycol monomethyl ether, dipropylene glycol monoethyl ether, tripropylene glycol monomethyl ether, 1-methoxy-2-propanol, 1-ethoxy-2-propanol, 1-methylglyceryl ether, 2-methylglyceryl ether, 1,3-dimethylglyceryl ether, 1-ethylglyceryl ether, 1,3-diethylglyceryl ether, 1-pentylglyceryl ether, 2-pentylglyceryl ether, 1-octylglyceryl ether, 2-ethylhexylglyceryl ether, diethylene glycol monobutyl ether and others,

(D5) aromatic ethers of glycols such as phenoxyethanol, diethylene glycol monophenyl ether, triethylene glycol monophenyl ether, polyethylene glycol monophenyl ether with an average molecular weight of about 480, 2-benzyloxyethanol, diethylene glycol monobenzyl ether and others, and

(D6) organic solvents other than the above (D1) to (D5) such as 3-methoxy-3-methyl-1-butanol and others.

From the viewpoints of stably incorporating component (C) and suppressing the desorption of silica capsules enclosing a functional agent from textile products during rinsing, component (D) is preferably one or more selected from phenoxyethanol, diethylene glycol monobutyl ether, 3-methoxy-3-methyl-1-butanol, ethanol, ethylene glycol, propylene glycol and butylene glycol, and more preferably one or more selected from phenoxyethanol, diethylene glycol monobutyl ether, 3-methoxy-3-methyl-1-butanol, ethylene glycol and propylene glycol.

When the detergent composition of the present invention contains component (D), the detergent composition contains component (D) in an amount of preferably 1 mass% or more, more preferably 3 mass% or more, further preferably 5 mass% or more and furthermore preferably 8 mass% or more from the viewpoints of stably incorporating component (C) and suppressing the desorption of silica capsules enclosing a functional agent from textile products during rinsing, and preferably 20 mass% or less, more preferably 18 mass% or less and further preferably 15 mass% or less from the viewpoints of suppressing the leakage of a functional agent from silica capsules in component (A) and suppressing the desorption of silica capsules enclosing a functional agent from textile products during rinsing.

The detergent composition of the present invention can further contain a pH adjuster as component (E) from the viewpoints of suppressing the precipitation or separation of solids in the composition in low-temperature environments and suppressing the desorption of silica capsules enclosing a functional agent from textile products during rinsing. However, pH adjusters enclosed in component (A) are excluded from component (E) .

Examples of the pH adjuster include a compound selected from

(1) one or more acid agents selected from inorganic acids such as hydrochloric acid, sulfuric acid and others, and organic acids such as p-toluenesulfonic acid, (o-, m- and p-) xylene sulfonic acids, citric acid, succinic acid, malic acid, fumaric acid, tartaric acid, malonic acid, maleic acid and others, and

(2) one or more alkali agents selected from sodium hydroxide, potassium hydroxide, ammonia or derivatives thereof, amine salts such as monoethanolamine, diethanolamine, triethanolamine and others, sodium carbonate and potassium carbonate.

When the liquid detergent composition of the present invention contains component (E), the detergent composition contains component (E) in an amount of preferably 0.01 mass% or more, more preferably 0.03 mass% or more, further preferably 0.05 mass% or more, furthermore preferably 0.1 mass% or more and furthermore preferably 0.2 mass% or more, and preferably 2 mass% or less, more preferably 1.5 mass% or less, further preferably 1.0 mass% or less and furthermore preferably 0.8 mass% or less from the viewpoints of suppressing the precipitation or separation of solids in the composition in low-temperature environments and suppressing the desorption of silica capsules enclosing a functional agent from textile products during rinsing.

The balance of the detergent composition of the present invention is water. While water commonly used in liquid detergents is used as the water, deionized water (ion exchange water) or water obtained by adding sodium hypochlorite in an amount of 1 mg/kg or more and 5 mg/kg or less to ion exchange water can be used. Further, distilled water or tap water can also be used.

The detergent composition of the present invention contains water in an amount of preferably 50 mass% or more, more preferably 55 mass% or more and further preferably 60 mass% or more, and preferably 80 mass% or less, more preferably 75 mass% or less and further preferably 70 mass% or less in the detergent composition from the viewpoint of suppressing the desorption of silica capsules enclosing a functional agent from textile products during rinsing.

In addition to the above components, the detergent composition of the present invention may be formulated with components (F1) to (F8) below from the viewpoint of suppressing the desorption of silica capsules enclosing a functional agent from textile products during rinsing. However, those which are enclosed in component (A) are excluded from these components.

(F1) recontamination prevention agents and dispersants such as polyacrylic acid, polymaleic acids, carboxymethyl cellulose and others
(F2) one or more bleaching agents selected from hydrogen peroxide, sodium percarbonate and sodium perborate and others
(F3) one or more bleach activators selected from tetraacetylethylenediamine and bleaching activators represented by the general formulas (I-2) to (I-7) of JP-A H6-316700 and others
(F4) one or more enzymes selected from cellulase, amylase, pectinase, protease and lipase
(F5) fluorescent dyes, for example, fluorescent dyes commercially available as Tinopal CBS (trade name, manufactured by Ciba Specialty Chemicals) or Whitex SA (trade name, manufactured by Sumitomo Chemical Co., Ltd.)
(F6) one or more antioxidants selected from butylhydroxytoluene, distyrenated cresol, sodium sulfite and sodium bisulfite and others
(F7) colorants, fragrances, antibacterial preservatives such as diclosan and others, and antifoaming agents such as a silicone and others
(F8) hydrogenated castor oil

The detergent composition of the present invention can contain hydrogenated castor oil as component (F8) to suppress the separation of silica capsules enclosing a functional agent of component (A). A content of component (F8) in the detergent composition of the present invention is preferably 0.05 mass% or more, more preferably 0.07 mass% or more and further preferably 0.1 mass% or more from the viewpoints of suppressing the separation of fragrance microcapsules and suppressing the desorption of silica capsules enclosing a functional agent from textile products during rinsing, and preferably 1 mass% or less, more preferably 0.8 mass% or less and further preferably 0.5 mass% or less from the viewpoints of reducing the viscosity of the detergent composition and suppressing the desorption of silica capsules enclosing a functional agent from textile products during rinsing.

A pH of the detergent composition of the present invention at 25°C is preferably 4 or more, more preferably 5 or more and further preferably 6 or more, and preferably 9 or less, more preferably 8.5 or less and further preferably 8 or less from the viewpoints of suppressing the precipitation or separation of solids in the composition in low-temperature environments and suppressing the desorption of silica capsules enclosing a functional agent from textile products during rinsing. The pH is measured in accordance with the pH measurement method described below.

[Method of measuring pH]

A composite electrode for pH measurements (9615S measurement method model JF15 manufactured by HORIBA) is connected to a pH meter (pH/ion meter D-71 manufactured by HORIBA), and the power is turned on. As the pH electrode internal solution, a saturated potassium chloride aqueous solution (3.33 mol/L) is used. Next, a pH 4.01 standard solution (phthalate standard solution), a pH 6.86 standard solution (neutral phosphate standard solution) and a pH 9.18 standard solution (borate standard solution) are each filled into a 100-mL beaker and immersed in a

constant temperature bath at 25°C for 30 minutes. A calibration operation of immersing the electrode for pH measurements for 3 minutes in a standard solution adjusted to a constant temperature is performed in the order of pH 6.86 -> pH 9.18 -> pH 4.01. A sample to be measured is adjusted to 25°C, the electrode of the pH meter is immersed in the sample, and a pH 3 minutes later is measured.

A viscosity of the detergent composition of the present invention at 25°C is preferably 10 mPa·s or more, more preferably 20 mPa·s or more and further preferably 30 mPa·s or more, and preferably 400 mPa·s or less, more preferably 300 mPa·s or less and further preferably 200 mPa·s or less from the viewpoints of ease of handling of the detergent composition and suppressing the desorption of silica capsules enclosing a functional agent from textile products during rinsing. Note that these viscosities are measured using a B-type viscometer (for example, VISCOMETER MODEL DVM-B manufactured by TOKYO KEIKI INC.) with rotor No. 3 or 4, a number of revolutions of 60 r/min and a measurement time of 60 seconds.

The detergent composition of the present invention can be suitably used for textile products.

Fibers to be washed with the detergent composition of the present invention may be either hydrophobic fibers or hydrophilic fibers. Examples of the hydrophobic fibers include, for example, protein fibers (milk protein casein fiber, promix and others), polyamide fibers (nylon and others), polyester fibers (polyester and others), polyacrylonitrile fibers (acrylic and others), polyvinyl alcohol fibers (vinylon and others), polyvinyl chloride fibers (polyvinyl chloride and others), polyvinylidene chloride fibers (vinylidene and others), polyolefin fibers (polyethylene, polypropylene and others), polyurethane fibers (polyurethane and others), polyvinyl chloride/polyvinyl alcohol copolymer fibers (polychlal and others), polyalkylene paraoxybenzoate fibers (benzoate and others), polyfluoroethylene fibers (polytetrafluoroethylene and others), glass fibers, carbon fibers, alumina fibers, silicone carbide fibers, rock wool (rock fibers), slag wool (slag fibers), metallic fibers (gold yarn, silver yarn and steel fiber) and others. Examples of the hydrophilic fibers include, for example, seed hair fibers (cotton, cotton, kapok and others), bast fibers (hemp, flax, ramie, cannabis, jute and others), vein fibers (manila hemp, sisal hemp and others), palm fibers, juncus, straw, animal hair fibers (wool, mohair, cashmere, camel hair, alpaca, vicuna, angora and others), silk fibers (domestic silk and wild silk), feathers, cellulose fibers (rayon, polynosic, cupro, acetate and others) and others.

Examples of the textile products include fabrics such as woven materials, knitted materials, nonwoven fabrics and others using hydrophobic fibers or hydrophilic fibers of the above, and products obtained by using them such as undershirts, T-shirts, dress shirts, blouses, slacks, caps, handkerchiefs, towels, knitwear, socks, underwear, tights, masks and others.

[Method for producing detergent composition]

The present invention provides a method for producing a detergent composition including, mixing the above components (A) and (B) with water.

In the method for producing a detergent composition of the present invention, the above component (C) can be further mixed.

In the method for producing a detergent composition of the present invention, the above component (D) can be further mixed.

In the method for producing a detergent composition of the present invention, the above component (E) can be further mixed.

In the method for producing a detergent composition of the present invention, any one or more of the above components (F1) to (F8) can be further mixed.

Components (A), (B), (C), (D), (E) and (F1) to (F8) are the same as in the aspects described in the detergent composition of the present invention.

In the method for producing a detergent composition of the present invention, for a mixing amount of component (A), a mixing amount of component (B), a mixing amount of component (C), a mixing amount of component (D), a mixing amount of component (E), a mass ratio (A)/(B) of a mixing amount of component (A) to a mixing amount of component (B), a mass ratio (C1)/(C2) of a mixing amount of component (C1) to a mixing amount of component (C2) and a mass ratio (C)/(A) of a mixing amount of component (C) to a mixing amount of component (A), the contents of the components at the mass ratios described in the detergent composition of the present invention can be read as the mixing amounts and applied to the method for producing a detergent composition of the present invention. Note that, in the present invention, a mixing amount of component (A) is expressed in terms of an effective content, i.e., an enclosed functional agent.

The aspects described in the detergent composition of the present invention can be appropriately applied to the method for producing a detergent composition of the present invention.

[Method for washing textile product]

The present invention provides a method for washing a textile product including, washing the textile product with a washing liquid obtained by mixing the detergent composition of the present invention with water (hereinafter also referred to as the washing liquid of the present invention), and thereafter rinsing the textile product with water.

The matters stated in the detergent composition of the present invention can be appropriately applied to the method for washing a textile product of the present invention.

In the method for washing a textile product of the present invention, the ranges of a mass ratio (A)/(B) of a content of component (A) to a content of component (B), a mass ratio (C1)/(C2) of a content of component (C1) to a content of component (C2) and a mass ratio (C)/(A) of a content of component (C) to a content of component (A) in the washing liquid are the same as the ranges described in the detergent composition of the present invention. Note that, in the present invention, a content of component (A) is expressed in terms of an effective content, i.e., an enclosed functional agent.

Water used in the method for washing a textile product of the present invention is preferably water having a hardness. The hardness of water is preferably 0°dH or more, more preferably 1°dH or more and furthermore preferably 2°dH or more, and preferably 30°dH or less, more preferably 20°dH or less and further preferably 10°dH or less in German hardness from the viewpoints of detergency for stains adhering to textile products and suppressing the desorption of silica capsules enclosing a functional agent from textile products during rinsing.

Here, German hardness (°dH) herein refers to a concentration of calcium and magnesium in water expressed in terms of $CaCO_3$ concentration, where 1 mg/L (ppm) = about 0.056°dH (1°dH = 17.8 ppm). This concentration of calcium and magnesium for German hardness is determined by a chelate titration method using ethylenediaminetetraacetic acid disodium salt.

A specific method for measuring a German hardness of water herein is described below.

<Method for measuring German hardness of water>

[Reagent]

- 0.01 mol/l EDTA·2Na solution: a 0.01 mol/l aqueous solution of disodium ethylenediaminetetraacetate (a solution for titration, 0.01 M EDTA-Na2, manufactured by Sigma-Aldrich)
- Indicator Universal BT (product name: Universal BT manufactured by DOJINDO LABORATORIES)
- Ammonia buffer solution for hardness measurements (a solution obtained by dissolving 67.5 g of ammonium chloride in 570 ml of a 28 w/v% ammonia solution and making a total amount 1000 ml with ion exchange water)

[Measurement of hardness]

(1) 20 ml of water as a sample is collected in a conical beaker with a volumetric pipette.
(2) 2 ml of the ammonia buffer solution for hardness measurements is added.
(3) 0.5 ml of the indicator Universal BT is added. It is confirmed that the solution after the addition is reddish purple.
(4) While the conical beaker is shaken well, the 0.01 mol/l EDTA·2Na solution is added dropwise from a burette, and the point of time when water as a sample turns blue is taken as the end point of titration.
(5) A total hardness is determined by the following calculation formula:

$$\text{hardness } (°\text{dH}) = T \times 0.01 \times F \times 56.0774 \times 100/A$$

T: titration amount of 0.01 mol/l EDTA·2Na solution (mL)
A: sample volume (20 mL, volume of water as sample)
F: factor for 0.01 mol/l EDTA·2Na solution

Examples of a method for washing a textile product with the washing liquid of the present invention are not particularly limited, but can include, for example, a method in which the target textile product is immersed in the washing liquid of the present invention. Here, immersion refers to a state where fibers of the textile product are immersed in the washing liquid of the present invention. When the textile product is washed by the immersion process, the textile product

may be washed while stirred.

In the method for washing a textile product of the present invention, the textile product absorbing the washing liquid can be hand-washed. Examples of a method for hand-washing include a method in which the textile product is washed while rubbed by hand, a method in which the textile product is washed while pushed down, a method in which the textile product is rubbed with another one by hand, and others. In the case of hand-washing, the detergent composition of the present invention is used at a concentration of preferably 1.0 g or more, more preferably 1.5 g or more and further preferably 2.0 g or more, and preferably 10 g or less, more preferably 7 g or less and further preferably 5 g or less relative to 1 L of water from the viewpoints of detergency for stains adhering to textile products and suppressing the desorption of silica capsules enclosing a functional agent from textile products during rinsing.

In the method for washing a textile product of the present invention, the textile product can be washed in a washing machine.

In the case of machine-washing, the detergent composition of the present invention is used at a concentration of preferably 0.2 g or more, more preferably 0.5 g or more and further preferably 1.0 g or more, and preferably 8 g or less, more preferably 5 g or less and further preferably 3 g or less relative to 1 L of water from the viewpoints of detergency for stains adhering to textile products and suppressing the desorption of silica capsules enclosing a functional agent from textile products during rinsing.

Examples of the washing machine include, for example, a top loader washing machine, a twin tub washing machine, a front loader washing machine, a pulsator washing machine, an agitator washing machine, a compact washing machine and others. Washing machines commercially available for household use of these types can be used.

The washing liquid of the present invention is preferably prepared by diluting the detergent composition of the present invention with water such that a content of each component falls within the above range. A specific dilution ratio may be preferably 500 times or more and more preferably 750 times or more, and preferably 5000 times or less and more preferably 3000 times or less from the viewpoints of setting an appropriate product volume in light of a use amount and a number of uses appropriate for the detergent composition and suppressing the desorption of silica capsules enclosing a functional agent from textile products during rinsing.

In the washing liquid of the present invention, a content of component (A) in terms of an enclosed functional agent is preferably 0.00003 mass% or more, more preferably 0.0001 mass% or more and further preferably 0.0003 mass% or more, and preferably 0.005 mass% or less, more preferably 0.002 mass% or less and further preferably 0.001 mass% or less in the washing liquid from the viewpoints of obtaining a sufficient scent effect on fibers and suppressing the desorption of silica capsules enclosing a functional agent from textile products during rinsing. Note that, in the present invention, a content of component (A) is expressed in terms of an effective content, i.e., an enclosed functional agent.

The washing liquid of the present invention contains component (B) in an amount of preferably 0.000001 mass% or more, more preferably 0.000003 mass% or more and further preferably 0.00001 mass% or more, and preferably 0.003 mass% or less, more preferably 0.001 mass% or less and further preferably 0.0003 mass% or less in the washing liquid from the viewpoint of suppressing the desorption of silica capsules enclosing a functional agent from textile products during rinsing.

When the washing liquid of the present invention contains component (C), the washing liquid contains component (C) in an amount of preferably 0.001 mass% or more, more preferably 0.003 mass% or more and further preferably 0.01 mass% or more, and preferably 0.25 mass% or less, more preferably 0.1 mass% or less and further preferably 0.05 mass% or less from the viewpoints of detergency for stains adhering to textile products and suppressing the desorption of silica capsules enclosing a functional agent from textile products during rinsing.

When the washing liquid of the present invention contains component (D), the washing liquid contains component (D) in an amount of preferably 0.0003 mass% or more, more preferably 0.001 mass% or more and further preferably 0.003 mass% or more, and preferably 0.05 mass% or less, more preferably 0.03 mass% or less and further preferably 0.01 mass% or less from the viewpoints of detergency for stains adhering to textile products and suppressing the desorption of silica capsules enclosing a functional agent from textile products during rinsing.

When the washing liquid of the present invention contains component (E), the washing liquid contains component (E) in an amount of preferably 0.00003 mass% or more, more preferably 0.0001 mass% or more and further preferably 0.0003 mass% or more, and preferably 0.005 mass% or less, more preferably 0.003 mass% or less and further preferably 0.001 mass% or less from the viewpoints of detergency for stains adhering to textile products and suppressing the desorption of silica capsules enclosing a functional agent from textile products during rinsing.

When the washing liquid of the present invention contains component (F8), the washing liquid contains component (F8) in an amount of preferably 0.00001 mass% or more, more preferably 0.00005 mass% or more and further preferably 0.0001 mass% or more from the viewpoints of suppressing the separation of fragrance microcapsules and suppressing the desorption of silica capsules enclosing a functional agent from textile products during rinsing, and preferably 0.0050 mass% or less, more preferably 0.001 mass% or less and further preferably 0.003 mass% or less from the viewpoint of suppressing the desorption of silica capsules enclosing a functional agent from textile products during rinsing.

A temperature of the washing liquid is preferably 0°C or more, more preferably 3°C or more and further preferably 5°C or more from the viewpoints of being able to further improve detergency for stains adhering to textile products and suppressing the desorption of silica capsules enclosing a functional agent from textile products during rinsing, and preferably 40°C or less and more preferably 35°C or less from the viewpoints of preventing the excessive removal of oil agents contained in constituent fibers of clothing themselves to attain a good finish of textile products, and suppressing the desorption of silica capsules enclosing a functional agent from textile products during rinsing.

A washing time is preferably 2 minutes or more and more preferably 3 minutes or more from the viewpoints of being able to further improve detergency for stains adhering to textile products and suppressing the desorption of silica capsules enclosing a functional agent from textile products during rinsing, and preferably 60 minutes or less and more preferably 45 minutes or less from the viewpoints of attaining a good finish of textile products and suppressing the desorption of silica capsules enclosing a functional agent from textile products during rinsing.

A pH of the washing liquid is preferably 4 or more, more preferably 5 or more and further preferably 6 or more, and preferably 10 or less, more preferably 9 or less and further preferably 8 or less from the viewpoints of being able to further improve detergency for stains adhering to textile products and suppressing the desorption of silica capsules enclosing a functional agent from textile products during rinsing. The pH of the washing liquid can also be measured in the same manner as the pH of the liquid detergent composition of the present invention. A pH of the washing liquid at 25°C may fall within the above range.

A value of a bath ratio represented by a ratio of an amount of the washing liquid (liter) to a mass of textile products (kg), i.e., a value of "amount of washing liquid (liter)/mass of textile products (kg)" (hereinafter, this ratio is sometimes referred to as a bath ratio), is preferably 2 or more, more preferably 3 or more, further preferably 4 or more and furthermore preferably 5 or more from the viewpoints of attaining a good finish of textile products and suppressing the desorption of silica capsules enclosing a functional agent from textile products during rinsing, and preferably 40 or less, more preferably 30 or less and further preferably 20 or less from the viewpoints of maintaining detergency for stains adhering to textile products and suppressing the desorption of silica capsules enclosing a functional agent from textile products during rinsing.

The method for washing a textile product of the present invention is directed to the same fibers and textile products as those which are described in the detergent composition of the present invention.

In the method for washing a textile product of the present invention, when the textile product is washed as above, the textile product can also be rinsed after washed with the washing liquid of the present invention. In the present invention, rinsing refers to a step in which a textile product absorbing the washing liquid is brought into contact with new water to reduce an amount of the components of the present invention carried over together with the washing liquid contained in the textile product. Note that a temperature or an amount of water used for rinsing may be the same as or different from that of water used in the washing operation of the present invention. Multiple numbers of times of rinsing can be performed.

A temperature of rinsing water is preferably 5°C or more and more preferably 10°C or more, and preferably 40°C or less and more preferably 30°C or less from the viewpoint of suppressing the desorption of silica capsules enclosing a functional agent from textile products during rinsing.

Further, a rinsing time is preferably 1 minute or more and more preferably 2 minutes or more, and preferably 30 minutes or less, more preferably 20 minutes or less and further preferably 15 minutes or less from the viewpoint of suppressing the desorption of silica capsules enclosing a functional agent from textile products during rinsing.

The textile product treated in the method for washing a textile product of the present invention may be dewatered and dried naturally or dried in a heating dryer. The textile product after drying may be ironed when a finish is more important.

[Kit for washing liquid]

The present invention provides a kit for a washing liquid containing, a first agent containing the above component (A) and a second agent containing the above component (B).

Specifically, the kit for a washing liquid of the present invention is a kit containing the first agent containing component (A) and the second agent containing component (B) in a state of separation.

The kit for a washing liquid of the present invention is contained in a container capable of storing the components dividedly, and used in such a manner that the agents are mixed when the kit is used. Particularly, the kit is preferably a kit filled into a container in which the first agent containing component (A) (and preferably substantially free of component (B)) and the second agent containing component (B) (and preferably substantially free of component (A)) are retained separately from each other.

The washing liquid of the present invention is prepared by mixing the first agent containing component (A) and the second agent containing component (B) with water using the kit for a washing liquid of the present invention.

The aspects described in the detergent composition and the method for producing the same of the present invention and the method for washing a textile product of the present invention can be appropriately applied to the kit

for a washing liquid of the present invention.

Components (A) and (B) are the same as in the aspects described in the detergent composition of the present invention.

In the kit for a washing liquid of the present invention, the first agent containing component (A) and the second agent containing component (B) are mixed with water such that, in the washing liquid, a content of component (A) in terms of an enclosed functional agent is preferably 0.00003 mass% or more, more preferably 0.0001 mass% or more and further preferably 0.0003 mass% or more, and preferably 0.005 mass% or less, more preferably 0.002 mass% or less and further preferably 0.001 mass% or less from the viewpoints of making an effect more likely to be felt and suppressing the desorption of silica capsules enclosing a functional agent from textile products during rinsing. Note that, in the present invention, a content of component (A) is expressed in terms of an effective content, i.e., an enclosed functional agent.

In the kit for a washing liquid of the present invention, the first agent containing component (A) and the second agent containing component (B) are mixed with water such that, in the washing liquid, a content of component (B) is preferably 0.000001 mass% or more, more preferably 0.000003 mass% or more and further preferably 0.00001 mass% or more, and preferably 0.003 mass% or less, more preferably 0.001 mass% or less and further preferably 0.0003 mass% or less from the viewpoint of suppressing the desorption of silica capsules enclosing a functional agent from textile products during rinsing.

In the kit for a washing liquid of the present invention, the first agent containing component (A) and the second agent containing component (B) are mixed with water such that, in the washing liquid, a mass ratio of a content of component (A) in terms of an enclosed functional agent to a content of component (B), (A)/(B), is preferably 20 or more, more preferably 25 or more and further preferably 30 or more, and preferably 100 or less, more preferably 75 or less, further preferably 50 or less, furthermore preferably 45 or less, furthermore preferably 40 or less and furthermore preferably 35 or less from the viewpoint of suppressing the desorption of silica capsules enclosing a functional agent from textile products during rinsing.

The kit for a washing liquid of the present invention preferably contains the above component (C) in at least one of the first agent containing component (A) and the second agent containing component (B).

Component (C) is the same as in the aspects described in the detergent composition of the present invention.

When the kit for a washing liquid of the present invention contains component (C) in at least one of the first agent containing component (A) and the second agent containing component (B), the first agent and the second agent are mixed with water such that, in the washing liquid, a content of component (C) is preferably 0.001 mass% or more, more preferably 0.003 mass% or more and further preferably 0.01 mass% or more, and preferably 0.25 mass% or less, more preferably 0.1 mass% or less and further preferably 0.05 mass% or less from the viewpoints of detergency for stains adhering to textile products and suppressing the desorption of silica capsules enclosing a functional agent from textile products during rinsing.

When the kit for a washing liquid of the present invention contains components (C1) and (C2) as component (C) in at least one of the first agent containing component (A) and the second agent containing component (B), the first agent and the second agent are mixed with water such that, in the washing liquid, a mass ratio of a content of component (C1) to a content of component (C2), (C1)/(C2), is preferably 0.05 or more, more preferably 0.1 or more and further preferably 0.2 or more, and preferably 3 or less, more preferably 2 or less, further preferably 1 or less and furthermore preferably 0.5 or less from the viewpoint of the dispersion stability of component (A) or other base agents or detergency during use as a detergent.

When the kit for a washing liquid of the present invention contains component (C) in at least one of the first agent containing component (A) and the second agent containing component (B), the first agent and the second agent are mixed with water such that, in the washing liquid, a mass ratio of a content of component (C) to a content of component (A) in terms of an enclosed functional agent, (C)/(A), is preferably 10 or more, preferably 20 or more, more preferably 50 or more and further preferably 70 or more, and preferably 200 or less, more preferably 150 or less, further preferably 100 or less and furthermore preferably 80 or less from the viewpoints of the dispersibility of component (A) and suppressing the desorption of silica capsules enclosing a functional agent from textile products during rinsing.

The kit for a washing liquid of the present invention preferably contains the above component (D) in at least one of the first agent containing component (A) and the second agent containing component (B).

Component (D) is the same as in the aspects described in the detergent composition of the present invention.

When the kit for a washing liquid of the present invention contains component (D) in at least one of the first agent containing component (A) and the second agent containing component (B), the first agent and the second agent are mixed with water such that, in the washing liquid, a content of component (D) is preferably 0.0003 mass% or more, more preferably 0.001 mass% or more and further preferably 0.003 mass% or more, and preferably 0.05 mass% or less, more preferably 0.03 mass% or less and further preferably 0.01 mass% or less from the viewpoints of stably incorporating component (C), detergency for stains adhering to textile products, and suppressing the desorption of silica capsules enclosing a functional agent from textile products during rinsing.

The kit for a washing liquid of the present invention preferably contains the above component (E) in at least one of the first agent containing component (A) and the second agent containing component (B).
Component (E) is the same as in the aspects described in the detergent composition of the present invention.
When the kit for a washing liquid of the present invention contains component (E) in at least one of the first agent containing component (A) and the second agent containing component (B), the first agent and the second agent are mixed with water such that, in the washing liquid, a content of component (E) is preferably 0.00003 mass% or more, more preferably 0.0001 mass% or more and further preferably 0.0003 mass% or more, and preferably 0.005 mass% or less, more preferably 0.003 mass% or less and further preferably 0.001 mass% or less from the viewpoints of detergency for stains adhering to textile products and suppressing the desorption of silica capsules enclosing a functional agent from textile products during rinsing.
The kit for a washing liquid of the present invention preferably contains water in at least one of the first agent containing component (A) and the second agent containing component (B).
When the kit for a washing liquid of the present invention contains water in at least one of the first agent containing component (A) and the second agent containing component (B), the first agent and the second agent are mixed with water such that, in the washing liquid, a content of water is preferably 99 mass% or more, more preferably 99.25 mass% or more and further preferably 99.5 mass% or more, and preferably 99.99 mass% or less, more preferably 99.97 mass% or less and further preferably 99.95 mass% or less from the viewpoint of suppressing the desorption of silica capsules enclosing a functional agent from textile products during rinsing.
The kit for a washing liquid of the present invention can contain any one or more of the above components (F1) to (F8) in at least one of the first agent containing component (A) and the second agent containing component (B).
When the kit for a washing liquid of the present invention contains component (F8) as component (F) in at least one of the first agent containing component (A) and the second agent containing component (B), the first agent and the second agent are mixed with water such that, in the washing liquid, a content of component (F8) is preferably 0.00001 mass% or more, more preferably 0.00005 mass% or more and further preferably 0.0001 mass% or more from the viewpoints of suppressing the separation of fragrance microcapsules and suppressing the desorption of silica capsules enclosing a functional agent from textile products during rinsing, and preferably 0.0050 mass% or less, more preferably 0.001 mass% or less and further preferably 0.003 mass% or less from the viewpoint of suppressing the desorption of silica capsules enclosing a functional agent from textile products during rinsing.
The kit for a washing liquid of the present invention can be applied for a two-agent type detergent composition which is contained in a container capable of storing the first agent containing component (A) and the second agent containing component (B) dividedly and used in such a manner that the agents are mixed when the composition is used. Further, the kit for a washing liquid of the present invention can be suitably used for textile products.
In addition to the aforementioned embodiments, the present invention discloses the aspects below.
<1> A detergent composition containing the following components (A) and (B) and water,

component (A): a silica capsule enclosing a functional agent, and
component (B): a cationic polymer (excluding those enclosed in the silica capsule of component (A)).

<2> The detergent composition according to <1>, wherein component (A) has a shell containing silica as a constituent component and a core enveloped in the shell and containing one or more functional agents.
<3> The detergent composition according to <1> or <2>, wherein component (A) has a second shell containing silica as a constituent component, a first shell enveloped in the second shell and containing silica as a constituent component, and a core enveloped in the first shell and containing one or more functional agents.
<4> The detergent composition according to <2> or <3>, wherein a thickness of the shell of component (A) (which is the first shell when component (A) has the first shell and the second shell) is preferably 5 nm or more, and preferably 20 nm or less and more preferably 15 nm or less.
<5> The detergent composition according to <3> or <4>, wherein a thickness of the second shell of component (A) is preferably 10 nm or more and more preferably 20 nm or more, and preferably 100 nm or less and more preferably 80 nm or less.
<6> The detergent composition according to any of <1> to <5>, wherein the functional agent of component (A) is one or more selected from a fragrance, a fragrance precursor, an oil agent, an antioxidant, a cooling sensation agent, a warming sensation agent, an antibacterial agent, a dye, a colorant, an ultraviolet absorber, a silicone, a solvent and an oil-soluble polymer, further one or more selected from a fragrance, a fragrance precursor, an oil agent, an antioxidant, a cooling sensation agent, a warming sensation agent, an antibacterial agent, an ultraviolet absorber and a solvent, and further one or more selected from a fragrance and a fragrance precursor.
<7> The detergent composition according to any of <1> to <6>, wherein a volume average particle size of component

(A) is preferably 0.5 um or more, more preferably 0.7 um or more and further preferably 1 um or more, and preferably 50 um or less, more preferably 10 um or less and further preferably 5 um or less.
<8> The detergent composition according to any of <3> to <7>, wherein component (A) is obtained by a production method including the following steps (1) and (2),

step (1): a step of forming a capsule enclosing the one or more functional agents, in which an organic phase containing the functional agents and a raw material silica (for example, a tetraalkoxysilane) is mixed and emulsified in an aqueous phase containing a surfactant (for example, a cationic surfactant), and a sol-gel reaction is thereafter carried out under an acidic condition to form a shell, and
step (2): a step of forming a capsule having the second shell enveloping the first shell, in which a raw material silica (for example, a tetraalkoxysilane) is further added to a dispersion liquid containing the capsule obtained in step (1), and a sol-gel reaction is carried out.

<9> The detergent composition according to any of <3> to <8>, wherein component (A) is obtained by a production method including the following steps (1a) and (2a),

step (1a): a step of forming a capsule having the core and the first shell, in which an organic phase containing the one or more functional agents and a tetraalkoxysilane in an amount of 10 mass% or more and 60 mass% or less relative to the functional agents is emulsified in an aqueous phase containing a surfactant (for example, a cationic surfactant), and a sol-gel reaction is carried out under an acidic condition, and
step (2a): a step of forming a capsule having the second shell enveloping the first shell, in which a tetraalkoxysilane is further added to an aqueous dispersion containing the capsule obtained in step (1a), and a sol-gel reaction is carried out in such a manner that an initial pH of the sol-gel reaction of step (2a) is maintained lower than an initial pH of the sol-gel reaction of step (1a),
the production method further including the following step (3a) as necessary,
step (3a): a step of forming a capsule having a third shell, in which a dispersion liquid containing the capsule obtained in step (2a) is mixed with an aqueous solution containing an organic polymeric compound (for example, an anionic synthetic polymeric compound).

<10> The detergent composition according to <8> or <9>, wherein the sol-gel reactions in steps (1) and (2) or steps (1a) and (2a) are reactions of synthesizing silica of the first and second shells, in which a raw material silica (silica precursor) is polymerized with alcohol elimination through hydrolysis and polycondensation under an acidic condition.
<11> The detergent composition according to any of <1> to <10>, wherein a proportion of the functional agent in component (A) is 5 mass% or more, further 10 mass% or more and further 12 mass% or more, and 50 mass% or less, further 45 mass% or less and further 40 mass% or less.
<12> The detergent composition according to any of <1> to <11>, wherein a weight average molecular weight of component (B) is preferably 100,000 or more, more preferably 500,000 or more, further preferably 1,000,000 or more and furthermore preferably 1,500,000 or more, and preferably 5,000,000 or less, more preferably 4,000,000 or less, further preferably 3,000,000 or less, furthermore preferably 2,500,000 or less and furthermore preferably 2,000,000 or less.
<13> The detergent composition according to any of <1> to <12>, wherein component (B) is one or more selected from (B1) a polysaccharide derivative having a cation group (hereinafter referred to as component (B1)) and (B2) a cationic polymer obtained by polymerizing an unsaturated monomer having a cation group (hereinafter referred to as component (B2)), and preferably (B2) a cationic polymer obtained by polymerizing an unsaturated monomer having a cation group.
<14> The detergent composition according to <13>, wherein component (B1) is a polysaccharide derivative formed in such a manner that a cation group is bonded directly or via a linking group to a group derived by the removal of a hydrogen atom from a hydroxyl group of a polysaccharide or a derivative thereof of a precursor compound.
<15> The detergent composition according to <13> or <14>, wherein component (B1) is a polysaccharide derivative formed in such a manner that a cation group is introduced into one or more polysaccharides selected from cellulose, guar gum and starch or a polysaccharide derivative selected from their hydroxyalkyl-substitution species.
<16> The detergent composition according to <15>, wherein component (B1) is a polysaccharide derivative formed in such a manner that a cation group, preferably a group including a nitrogen cation and more preferably a quaternary ammonium group is bonded via a linking group [hereinafter referred to as linking group (1)], which is an alkylene group with 1 or more and 4 or less carbons which may include a hydroxyl group, to a group derived by the removal of a hydrogen atom from a hydroxyl group of a precursor compound, which is a polysaccharide or a derivative thereof and preferably the hydroxyalkyl-substitution species.
<17> The detergent composition according to <16>, wherein linking group (1) of component (B1) is one or more

alkylene groups selected from a linear alkylene group with 1 or more and 4 or less carbons which may include a hydroxyl group and a branched alkylene group with 1 or more and 4 or less carbons which may include a hydroxyl group.

<18> The detergent composition according to <16> or <17>, wherein when the cation group of component (B1) is a quaternary ammonium group, three hydrocarbon groups bonded to the quaternary ammonium group other than linking group (1) are each independently a linear or branched hydrocarbon group with 1 or more and 4 or less carbons, preferably a linear hydrocarbon group with 1 or more and 4 or less carbons and more preferably a methyl group or an ethyl group, and a counterion of the quaternary ammonium group is one or more selected from an alkyl sulfate ion with 1 or more and 3 or less carbons, a sulfate ion, a phosphate ion, a fatty acid ion with 1 or more and 3 or less carbons and a halide ion, preferably one or more selected from an alkyl sulfate ion with 1 or more and 3 or less carbons, a sulfate ion and a halide ion, more preferably one or more halide ions selected from a fluoride ion, a chloride ion, a bromide ion and an iodide ion and further preferably one or more halide ions selected from a chloride ion and a bromide ion.

<19> The detergent composition according to any of <13> to <18>, wherein a degree of substitution of a cation group (degree of cationization) of component (B1) is preferably 0.001 or more, more preferably 0.01 or more, further preferably 0.1 or more and furthermore preferably 0.5 or more, and preferably 1.5 or less, more preferably 1.4 or less and further preferably 1.3 or less.

<20> The detergent composition according to any of <13> to <19>, wherein component (B1) is a polysaccharide derivative having both a cation group and a hydrocarbon group with 1 or more and 18 or less carbons and preferably a polysaccharide derivative formed in such a manner that a hydrocarbon group with 1 or more and 18 or less carbons is bonded directly or via a linking group [hereinafter referred to as linking group (2)] to a polysaccharide or a derivative thereof of a precursor compound.

<21> The detergent composition according to <20>, wherein linking group (2) of component (B1) is one or more groups selected from an alkyleneoxy group with 1 or more and 3 or less carbons which may have a hydroxy group, a polyoxyalkylene group having an alkylene group with 1 or more and 3 or less carbons, a carbonyl group, a carbonyloxy group and an oxycarbonyl group.

<22> The detergent composition according to <20> or <21>, wherein the polysaccharide derivative having a cation group and a hydrocarbon group with 1 or more and 18 or less carbons of component (B1) is a polysaccharide derivative formed in such a manner that a hydrocarbon group with 1 or more and 18 or less carbons is bonded directly or via linking group (2) and preferably via linking group (2) to an oxygen atom derived by the removal of a hydrogen atom from part or all of the hydroxyl groups of the hydroxyalkyl-substitution species.

<23> The detergent composition according to any of <20> to <22>, wherein the hydrocarbon group with 1 or more and 18 or less carbons of the polysaccharide derivative having a cation group and a hydrocarbon group with 1 or more and 18 or less carbons of component (B1) is a hydrocarbon group and preferably an aliphatic hydrocarbon group with preferably 2 or more, further preferably 4 or more, further preferably 6 or more, furthermore preferably 8 or more and furthermore preferably 10 or more, and preferably 16 or less and more preferably 14 or less carbons.

<24> The detergent composition according to any of <20> to <23>, wherein a degree of substitution of a hydrocarbon group with 1 or more and 18 or less carbons (degree of alkylation) of the polysaccharide derivative having a cation group and a hydrocarbon group with 1 or more and 18 or less carbons of component (B1) is preferably 0.0001 or more, more preferably 0.001 or more and further preferably 0.01 or more, and preferably 0.4 or less, more preferably 0.2 or less, further preferably 0.1 or less and furthermore preferably 0.05 or less.

<25> The detergent composition according to any of <20> to <24>, wherein a ratio of a degree of substitution of an anion group to a total of a degree of substitution of a cation group and a degree of substitution of a hydrocarbon group with 1 or more and 18 or less carbons in component (B1), degree of substitution of anion group/(degree of substitution of cation group + degree of substitution of hydrocarbon group with 1 or more and 18 or less carbons), is preferably 3 or less, more preferably 1.7 or less, further preferably 1.5 or less, furthermore preferably 1 or less, furthermore preferably 0.5 or less and furthermore preferably 0.1 or less, and 0 or more and preferably 0.

<26> The detergent composition according to any of <13> to <25>, wherein a weight average molecular weight of component (B1) is preferably 100,000 or more, more preferably 500,000 or more, further preferably 1,000,000 or more and furthermore preferably 1,500,000 or more, and preferably 5,000,000 or less, more preferably 4,000,000 or less, further preferably 3,000,000 or less, furthermore preferably 2,500,000 or less and furthermore preferably 2,000,000 or less.

<27> The detergent composition according to any of <13> to <25>, wherein component (B2) is a cationic polymer obtained by polymerizing an unsaturated monomer containing one or more cationic monomers (b21) selected from a compound represented by the following general formula (b21), an acid salt thereof and a quaternary salt thereof,

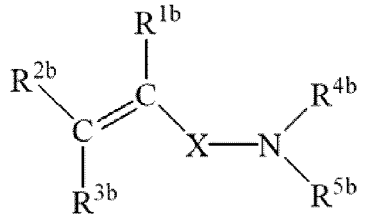

( b21 )

wherein in the general formula (b21), $R^{1b}$ and $R^{2b}$ each independently represent a hydrogen atom or a methyl group, $R^{3b}$ represents -C(O)OM (M is a hydrogen atom or an alkali metal atom) or a hydrogen atom, X represents - C(O)O-$R^{6b}$-, -C(O)N$R^{7b}$-$R^{8b}$- or -$CH_2$-, $R^{4b}$ represents a group represented by the general formula (b21') when X is - $CH_2$-,

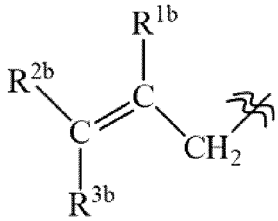

( b21' )

and represents an alkyl group with 1 or more and 3 or less carbons or a hydroxyalkyl group with 1 or more and 3 or less carbons when X is otherwise, $R^{5b}$ represents an alkyl group with 1 or more and 3 or less carbons, a hydroxyalkyl group with 1 or more and 3 or less carbons or a hydrogen atom, $R^{6b}$ and $R^{8b}$ each independently represent an alkylene group with 1 or more and 4 or less carbons, and $R^{7b}$ represents a hydrogen atom or an alkyl group with 1 or more and 3 or less carbons.

<28> The detergent composition according to <27>, wherein the compound represented by the general formula (b21) of component (B2) is a compound of the general formula (b21) in which X is -C(O)O-$R^{6b}$-, and preferably one or more selected from N,N-dimethylaminomethyl acrylate (or methacrylate), N,N-dimethylaminoethyl acrylate (or methacrylate), N,N-dimethylaminopropyl acrylate (or methacrylate), N,N-dimethylaminobutyl acrylate (or methacrylate), N,N-diethylaminomethyl acrylate (or methacrylate), N,N-diethylaminoethyl acrylate (or methacrylate), N,N-diethylaminopropyl acrylate (or methacrylate) and N,N-diethylaminobutyl acrylate (or methacrylate).

<29> The detergent composition according to <27>, wherein the compound represented by the general formula (b21) of component (B2) is a compound of the general formula (b21) in which X is -C(O)N$R^{7b}$-$R^{8b}$-, and preferably one or more selected from N,N-dimethylaminopropyl acrylic acid (or methacrylic acid) amide, N,N-dimethylaminomethyl acrylic acid (or methacrylic acid) amide, N,N-dimethylaminoethyl acrylic acid (or methacrylic acid) amide and N,N-dimethylaminobutyl acrylic acid (or methacrylic acid) amide.

<30> The detergent composition according to <27>, wherein the compound represented by the general formula (b21) of component (B2) is a compound of the general formula (b21) in which X is -$CH_2$- and $R^{4b}$ is a group represented by the above general formula (b21'), and preferably diallylamine.

<31> The detergent composition according to any of <27> to <30>, wherein the acid salt of the compound represented by the general formula (b21) of component (B2) is a salt formed by the neutralization of the compound represented by the general formula (b21) with an inorganic acid and preferably hydrochloric acid or sulfuric acid or an organic acid.

<32> The detergent composition according to any of <27> to <31>, wherein the quaternary salt of the compound represented by the general formula (b21) of component (B2) is a quaternary salt obtained by quaternizing the compound represented by the general formula (b21) with an alkyl halide with 1 or more and 3 or less carbons or an alkyl sulfate with 1 or more and 3 or less carbons or the like, and a counterion of the quaternary salt is a halogen ion or an alkyl sulfate ion with 1 or more and 3 or less carbons.

<33> The detergent composition according to any of <27> to <32>, wherein component (B2) contains monomer (b22) derived from a polymerizable vinyl compound copolymerizable with cationic monomer (b21) other than cationic monomer (b21).

<34> The detergent composition according to <33>, wherein monomer (b22) of component (B2) is a compound represented by the following general formula (b22),

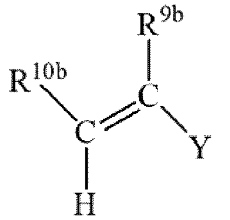

( b22 )

wherein in the formula, $R^{9b}$ and $R^{10b}$ each independently represent a hydrogen atom or an alkyl group with 1 or more and 3 or less carbons, Y represents an aryl group, -O-C(O)-$R^{11b}$, -C(O)O-($R^{12b}$-O)$_n$-$R^{13b}$ or - C(O)N$R^{14b}$-$R^{15b}$, $R^{11b}$, $R^{13b}$ and $R^{15b}$ each independently represent a hydrogen atom, a linear, branched or cyclic alkyl group or alkenyl group with 1 or more and 22 or less carbons, or an arylalkyl group with 6 or more and 14 or less carbons in total, $R^{12b}$ represents an alkylene group with 2 or 3 carbons, n represents a number of 0 or more and 50 or less, and $R^{14b}$ represents a hydrogen atom or an alkyl group with 1 or more and 3 or less carbons.

<35> The detergent composition according to <34>, wherein monomer (b22) of component (B2) is a compound of the general formula (b22) in which Y is -C(O)O-($R^{12b}$-O)$_n$-$R^{13b}$, $R^{13b}$ is an alkyl group with 8 or more and further 10 or more, and 18 or less and further 14 or less carbons, $R^{12b}$ is an ethylene group, and n is a number of 0 or more, and preferably 20 or less, more preferably 10 or less and further preferably 0.

<36> The detergent composition according to any of <33> to <35>, wherein monomer (b22) of component (B2) is one or more selected from an acrylic acid alkyl ester or a methacrylic acid alkyl ester having an alkyl group with 1 or more and preferably 8 or more, and 22 or less and preferably 14 or less carbons, and acrylamide.

<37> The detergent composition according to any of <27> to <36>, wherein component (B2) is a cationic polymer selected from (1) a cationic homopolymer obtained by polymerizing a compound selected from the compound represented by the general formula (b21), an acid salt thereof and a quaternary salt thereof, and preferably a monomer selected from N,N-diallylmethylamine, N,N-dimethylaminoethyl methacrylate, N,N-dimethylaminomethyl methacrylate, N,N-dimethylaminoethyl acrylate, N,N-dimethylaminomethyl acrylate, acid salts of these and quaternary salts of these, and (2) a cationic copolymer obtained by copolymerizing one or more compounds selected from the compound represented by the general formula (b21), an acid salt thereof and a quaternary salt thereof, and preferably a monomer selected from N,N-diallylmethylamine, N,N-dimethylaminoethyl methacrylate, N,N-dimethylaminomethyl methacrylate, N,N-dimethylaminoethyl acrylate, N,N-dimethylaminomethyl acrylate, acid salts of these and quaternary salts of these, and one or more compounds selected from the compound represented by the general formula (b22), and preferably an acrylic acid alkyl ester and a methacrylic acid alkyl ester having an alkyl group with 8 or more and 14 or less carbons, and acrylamide.

<38> The detergent composition according to any of <33> to <37>, wherein component (B2) contains cationic monomer (b21) and monomer (b22) as constituent monomers, a mass ratio of a proportion of monomer (b21) to a proportion of monomer (b22) in constituent monomers of component (B2), (b21)/(b22), is preferably 20/80 or more, more preferably 40/60 or more and further preferably 50/50 or more, and preferably 100/0 or less, more preferably 90/10 or less, further preferably 80/20 or less, furthermore preferably 70/30 or less and furthermore preferably 60/40 or less, and a total proportion of monomer (b21) and monomer (b22) in all constituent monomers of component (B2) is preferably 80 mass% or more, more preferably 90 mass% or more and further preferably 95 mass% or more, and preferably 100 mass% or less and more preferably 100 mass%.

<39> The detergent composition according to any of <13> to <38>, wherein a weight average molecular weight of component (B2) is preferably 100,000 or more, more preferably 500,000 or more, further preferably 1,000,000 or more and furthermore preferably 1,500,000 or more, and preferably 5,000,000 or less, more preferably 4,000,000 or less, further preferably 3,000,000 or less, furthermore preferably 2,500,000 or less and furthermore preferably 2,000,000 or less.

<40> The detergent composition according to any of <1> to <39>, wherein in the detergent composition, a content of component (A) in terms of the enclosed functional agent is preferably 0.02 mass% or more, more preferably 0.05 mass% or more, further preferably 0.1 mass% or more and furthermore preferably 0.2 mass% or more, and preferably 2 mass% or less, more preferably 1 mass% or less and further preferably 0.5 mass% or less.

<41> The detergent composition according to any of <1> to <40>, wherein the detergent composition contains component (B) in an amount of preferably 0.004 mass% or more, more preferably 0.008 mass% or more and further preferably 0.01 mass% or more, and preferably 0.1 mass% or less, more preferably 0.08 mass% or less and further preferably 0.05 mass% or less.

<42> The detergent composition according to any of <1> to <41>, wherein in the detergent composition, a mass ratio of a content of component (A) in terms of the enclosed functional agent to a content of component (B), (A)/(B), is preferably 20 or more, more preferably 25 or more and further preferably 30 or more, and preferably 100 or less,

more preferably 75 or less, further preferably 50 or less, furthermore preferably 45 or less, furthermore preferably 40 or less and furthermore preferably 35 or less.

<43> The detergent composition according to any of <1> to <42>, further containing the following component (C), component (C): a surfactant.

<44> The detergent composition according to <43>, wherein component (C) is one or more surfactants selected from (C1) an anionic surfactant and (C2) a nonionic surfactant.

<45> The detergent composition according to <43> or <44>, wherein in the detergent composition, a mass ratio of a content of component (C) to a content of component (A) in terms of the enclosed functional agent, (C)/(A), is preferably 10 or more, preferably 20 or more, more preferably 50 or more and further preferably 70 or more, and preferably 200 or less, more preferably 150 or less, further preferably 100 or less and furthermore preferably 80 or less.

<46> The detergent composition according to any of <1> to <45>, wherein the composition is used for textile products.

<47> A method for washing a textile product including, washing the textile product using a washing liquid obtained by mixing the detergent composition according to any of <1> to <46> with water, and thereafter rinsing the textile product with water.

<48> The method for washing a textile product according to <47>, wherein in the washing liquid, a content of component (A) in terms of the enclosed functional agent is preferably 0.00003 mass% or more, more preferably 0.0001 mass% or more and further preferably 0.0003 mass% or more, and preferably 0.005 mass% or less, more preferably 0.002 mass% or less and further preferably 0.001 mass% or less in the washing liquid.

<49> The method for washing a textile product according to <47> or <48>, wherein the washing liquid contains component (B) in an amount of preferably 0.000001 mass% or more, more preferably 0.000003 mass% or more and further preferably 0.00001 mass% or more, and preferably 0.003 mass% or less, more preferably 0.001 mass% or less and further preferably 0.0003 mass% or less in the washing liquid.

<50> A kit for a washing liquid containing, a first agent containing the following component (A) and a second agent containing the following component (B),

component (A): a silica capsule enclosing a functional agent, and
component (B): a cationic polymer (excluding those enclosed in the silica capsule of component (A)).

<51> The kit for a washing liquid according to <50>, wherein the first agent containing component (A) and the second agent containing component (B) are mixed with water such that, in the washing liquid, a content of component (A) in terms of the enclosed functional agent is preferably 0.00003 mass% or more, more preferably 0.0001 mass% or more and further preferably 0.0003 mass% or more, and preferably 0.005 mass% or less, more preferably 0.002 mass% or less and further preferably 0.001 mass% or less.

<52> The kit for a washing liquid according to <50> or <51>, wherein the first agent containing component (A) and the second agent containing component (B) are mixed with water such that, in the washing liquid, a content of component (B) is preferably 0.000001 mass% or more, more preferably 0.000003 mass% or more and further preferably 0.00001 mass% or more, and preferably 0.003 mass% or less, more preferably 0.001 mass% or less and further preferably 0.0003 mass% or less.

<53> The kit for a washing liquid according to any of <50> to <52>, wherein the first agent containing component (A) and the second agent containing component (B) are mixed with water such that, in the washing liquid, a mass ratio of a content of component (A) in terms of the enclosed functional agent to a content of component (B), (A)/(B), is preferably 20 or more, more preferably 25 or more and further preferably 30 or more, and preferably 100 or less, more preferably 75 or less, further preferably 50 or less, furthermore preferably 45 or less, furthermore preferably 40 or less and furthermore preferably 35 or less from the viewpoint of suppressing the desorption of silica capsules enclosing a functional agent from textile products during rinsing.

<54> The kit for a washing liquid according to any of <50> to <53>, wherein the kit is used for a two-agent type detergent composition which is contained in a container capable of storing the first agent containing component (A) and the second agent containing component (B) dividedly and used in such a manner that the agents are mixed when the composition is used.

<55> The kit for a washing liquid according to any of <50> to <54>, wherein the kit is used for textile products.

<56> A method for producing a detergent composition including, mixing the following components (A) and (B) with water,

component (A): a silica capsule enclosing a functional agent, and
component (B): a cationic polymer (excluding those enclosed in the silica capsule of component (A)).

Examples

<Formulation component>

In examples and comparative examples, the components below were used.

<Component (A)>

· a-1: silica capsule (1) enclosing a fragrance produced by the following method

(Production of a-1)

Step (1)

3.0 g of QUARTAMIN 60W (trade name, manufactured by Kao Corporation, cetyltrimethylammonium chloride, effective content 30 mass%) was diluted with 750 g of ion exchange water to obtain an aqueous phase component. An oil phase component prepared by mixing 200 g of model fragrance A of the formulation proportions shown in Table 1 and 50 g of tetraethoxysilane (hereinafter also referred to as "TEOS") was added to this aqueous phase component, and the mixed liquid was made to be emulsified using a homo mixer (manufactured by HsiangTai, model: HM-310, the same applies hereinafter) at a number of revolutions of 8,500 rpm, thus obtaining an emulsion. The volume average particle size of emulsion droplets was then 1.4 um.

After adjusted with a 1% aqueous sulfuric acid solution to have a pH of 3.8, the obtained emulsion was transferred to a separable flask provided with a stirring blade and a cooler, and stirred at 200 rpm for 24 hours while kept at a liquid temperature of 30°C, thus obtaining an aqueous dispersion containing silica capsules having a core composed of model fragrance A and a first shell composed of silica.

Step (2)

While the aqueous dispersion obtained in step (1) was stirred at a liquid temperature of 30°C, 21 g of TEOS was added dropwise thereto for 420 minutes. After dropwise addition, the aqueous dispersion was continuously further stirred for 17 hours and then cooled such that a second shell enveloping the first shell was formed, thus obtaining an aqueous dispersion containing silica capsules in which model fragrance A was enclosed in amorphous silica (the content of model fragrance A (functional agent) in the silica capsules was 19.4 mass%). The volume average particle size of the silica capsules was 2.1 um. The volume average particle sizes of the emulsion droplets and the silica capsules were measured using the laser diffraction/scattering particle size distribution measurement device "LA-960" (trade name, manufactured by HORIBA, Ltd.) For measurements, a flow cell was used, the medium was water, and the refractive index was set at 1.40-0i. The emulsion or the aqueous dispersion containing silica capsules was added to the flow cell, measurements were made at a concentration at which a transmittance near 90% was indicated, and the volume average particle size was determined on a volume basis.

Note that a thickness of the first shell was about 5 nm and a thickness of the second shell was 5 to 30 nm.

Model fragrance A

Model fragrance A having the composition shown in Table 1 (volume average ClogP: 3.9, specific gravity: 0.96) was used as an organic compound enclosed in the silica capsules. Note that the above volume average ClogP value of the model fragrance was calculated as the sum of the ClogP values of fragrance components contained in the model fragrance multiplied by their respective volume fractions in the model fragrance. In this calculation, all fragrance components whose contents in model fragrance A were 0.5 mass% or more were considered, and fragrance components whose contents in model fragrance A were less than 0.5 mass% and whose specific gravity and ClogP values were known were also included in the calculation.

[Table 1]

| Model fragrance A | | |
|---|---|---|
| Name of fragrance component | CLogP | Content (mass%) |
| Methyl dihydrojasmonate | 3 | 19.7 |
| γ-decalactone | 2.6 | 13 |
| Ethylene brassylate | 4.7 | 11.5 |
| o,t-butylcyclohexyl acetate | 4.4 | 10.6 |
| AMBER CORE | 4.1 | 7.7 |
| Other fragrances | | 37.5 |
| Total | | 100 |

- a-2: silica capsule (2) enclosing a fragrance produced by the method described in example 11 of patent literature 1. Model fragrance A having the composition shown in Table 1 was used as the fragrance enclosed in the silica capsule.

<Component (B)>

· b-1: cationized hydroxyethyl cellulose, component (B1), POIZ C-150L, manufactured by Kao Corporation, molecular weight 1,500,000, degree of cationization 1.3

· b-2: alkylated cationized hydroxyethyl cellulose (1), component (B1), manufactured by Kao Corporation, molecular weight 150,000, degree of cationization 0.127, degree of alkylation 0.021, carbon number of alkyl group 12

· b-3: alkylated cationized hydroxyethyl cellulose (2), component (B1), manufactured by Kao Corporation, molecular weight 2,100,000, degree of cationization 0.108, degree of alkylation 0.018, carbon number of alkyl group 12

· b-4: dimethyl diallyl ammonium chloride/acrylamide copolymer (1) = 24/76 (mass ratio), component (B2), Merquat 740, manufactured by Lubrizol Advanced Materials, Inc., molecular weight 120,000

· b-5: dimethyl diallyl ammonium chloride/acrylamide copolymer (2) = 50/50 (mass ratio), component (B2), Merquat 550, manufactured by Lubrizol Advanced Materials, Inc., molecular weight 1,600,000

· b-6: dimethyl diallyl ammonium chloride polymer, component (B2), Merquat 100, manufactured by Lubrizol Advanced Materials, Inc., molecular weight 150,000

The degrees of substitution and the weight average molecular weights of component (B1) were measured in the following manner.

(1) Measurement of degree of substitution

· Pretreatment of polysaccharide derivative

After 1 g of each polysaccharide derivative of component (B1) was dissolved in 100 g of water, the aqueous solution was placed in a dialysis membrane (Spectra/Por, cut-off molecular weight 1,000) and subjected to dialysis for 2 days. The obtained aqueous solution was freeze-dried using a freeze drier (eyela, FDU1100) to obtain a pretreated polysaccharide derivative.

· Calculation of mass of cation group by Kjeldahl method

200 mg of the polysaccharide derivative pretreated by the above method was precisely weighed, 10 mL of concentrated sulfuric acid and one Kjeldahl tablet (Merck) were added thereto, and thermal decomposition was performed in a Kjeldahl digester (manufactured by BUCHI Corporation, K-432). After the decomposition ended, 30 mL of ion exchange water was added to the sample, and the nitrogen content of the sample (mass%) was determined using an automatic Kjeldahl steam distillation unit (manufactured by BUCHI Corporation, K-370) to calculate the mass of a cation

group.

· Calculation of mass of hydrocarbon group (alkyl group) by the Zeisel determination

In a 10-mL vial (Mighty Vial No. 3), 200 mg of the polysaccharide derivative pretreated by the above method and 220 mg of adipic acid were precisely weighed, 3 mL of an internal standard solution (tetradecane/o-xylene = 1/25 (v/v)) and 3 mL of hydroiodic acid were added thereto, and the vial was sealed tightly. Further, 2.4 mg or 9 mg of 1-iodododecane was added in place of the polysaccharide derivative to prepare a sample for a calibration curve. Each sample was heated under the conditions of 160°C and 2 hours using a block heater (manufactured by Pierce Corporation, Reacti-Therm III Heating/Stirring Module) while stirred with a stirrer tip. After the sample was left to be cooled, an upper layer (o-xylene layer) was collected, and analysis was performed by gas chromatography (GC) (SHIMADZU CORPORATION, QD2010plus) under the following conditions.

· GC analysis conditions

Column: Agilent HP-1 (length: 30 m, liquid phase film thickness: 0.25 μL, inner diameter: 32 mm)
Split ratio: 20
Column temperature: 100°C (2 min) -> 10°C/min -> 300°C (15 min)
Injector temperature: 300°C
Detector: HID
Detector temperature: 330°C
Injection volume: 2 μL

The mass of an alkyl group in the sample was determined from the detection amounts of 1-iodododecane obtained by GC.

· Measurement of mass of hydroxyalkyl group

The mass of a hydroxyalkyl group was measured in the same manner as the mass of an alkyl group by quantifying an alkyl iodide derived from the hydroxyalkyl group.

· Calculation of degree of substitution of cation group and degree of substitution of alkyl group

The mass of the backbone of the polysaccharide derivative was calculated from the masses of a cation group and an alkyl group and the total sample mass described above, and each mass was converted into the amount of substance (mol) to calculate the degree of substitution of a cation group and the degree of substitution of an alkyl group on molar average.

· Measurement of weight average molecular weight

The weight average molecular weights of component (B1) were calculated in terms of polyethylene glycol by GPC (gel permeation chromatography).

The measurement conditions are the following.

· Column: TSKgel α-M
· Eluent: 50 mmol/L LiBr, 1% $CH_3COOH$, ethanol/water = 3/7
· Temperature: 40°C
· Flow rate: 0.6 mL/min

<Component (B') (comparative component of component (B))>

- b'-1: hydroxyethyl cellulose (1), Natrosol 250 JR 2540, manufactured by Ashland Japan Co., Ltd., molecular weight 150,000
- b'-2: hydroxyethyl cellulose (2), CELLOSIZE® QP-100 MH, manufactured by Dow Inc., molecular weight 1,400,000

· b'-3: alkylbenzyldimethylammonium chloride, SANISOL B-50, manufactured by Kao Corporation, carbon number of alkyl group 8 to 18

<Component (C)>

· c-1: potassium C18 internal olefin sulfonate (C18IOS). The mass ratio of the olefin species (potassium olefin sulfonates) to the hydroxy species (potassium hydroxy alkane sulfonates) in this C18IOS is 16/84. The mass ratio of the position distribution of a sulfonic acid group of the HAS species in this C18IOS is the following: position 1/position 2/position 3/position 4/position 5/positions 6 to 9 = 1.5/22.1/17.2/21.8/13.5/23.9. Further, (IO-1S)/(IO-2S) is equal to 1.6 (mass ratio).

Note that the position distribution of a sulfonic acid group of the HAS species contained in this C18IOS was measured by liquid chromatography-mass spectrometry (hereinafter abbreviated as LC-MS). Note that internal olefin sulfonates in which a double bond is present in position 6 or more could not be clearly fractionated due to overlapping peaks. The devices and analysis conditions used for the measurements are the following.

[Measurement instrument]

LC device: "LC-20ASXR" (manufactured by SHIMADZU CORPORATION)
LC-MS device: "LCMS-2020" (manufactured by SHIMADZU CORPORATION)
Column: ODS Hypersil (length: 250 mm, inner diameter: 4.6 mm, particle size: 3 um, manufactured by Thermo Fisher Scientific Inc.)
Detector: ESI (-), m/z = 349.15 (C18), 321.10 (C16) and 293.05 (C14)

[Solvent]

Solvent A: 10 mM ammonium acetate aqueous solution
Solvent B: acetonitrile/water = 95/5 solution with 10 mM ammonium acetate added

[Elution conditions]

Gradient: solvent A 60%, solvent B 40% (0-15 min) -> solvent A 30%, solvent B 70% (15.1-20 min) -> solvent A 60%, solvent B 40% (20.1-30 min)
Flow rate: 0.5 ml/min
Column temperature: 40°C
Injection volume: 5 ul

· c-2: polyoxyalkylene lauryl ether (C12EO9PO2EO9), a compound obtained by adding an average of 9 moles of EO, then adding an average of 2 moles of PO and further adding an average of 9 moles of EO to 1 mole of lauryl alcohol
· c-3: polyoxyalkylene lauryl ether (C12EO10), a compound obtained by adding an average of 10 moles of EO to 1 mole of lauryl alcohol

<Component (D)>

· d-1: propylene glycol, reagent, manufactured by FUJIFILM Wako Pure Chemical Corporation
· d-2: diethylene glycol monobutyl ether, reagent, manufactured by FUJIFILM Wako Pure Chemical Corporation

<Component (E)>

· e-1: citric acid
· e-2: monoethanolamine

<Component (F)>

· f-1: hydrogenated castor oil, iodine value 1.5 g-I2/100 g
· f-2: anti-foaming agent, DOWSIL AC8066 Antifoam, manufactured by Dow Corning Toray Co., Ltd.

<Water>

Wakayama City water whose hardness was adjusted to 4°dH with calcium chloride and magnesium chloride added at a proportion of 8:2 by mass ratio

<Preparation of detergent composition>

The detergent compositions shown in Tables 2 and 3 were prepared using the above components. Specifically, each detergent composition was prepared in the following manner.

A Teflon® stirrer piece with a length of 5 cm was put into a glass beaker with a capacity of 200 mL, and a mass was measured. Components (D) and (C) were put thereinto in this order, and stirred at room temperature for 5 minutes, provided that component (c-3) was put after heated to 50°C. Subsequently, ion exchange water for the balance and component (E) were put thereinto in this order, and fully stirred at room temperature. At the point of time when a temperature of the composition within the beaker reached 25°C, it was confirmed that the composition had a pH of 7, and then, components (F), (A) and (B) were put thereinto in this order, and stirred for 30 minutes, thus obtaining each liquid detergent composition shown in Tables 2 and 3. The preparation of each composition was performed in the formulation amount of component (A) shown in Tables 2 and 3 expressed in terms of an effective content, i.e., the enclosed functional agent. In other words, the mass percentages or the mass ratios for component (A) in Tables 2 and 3 are based on the amounts in terms of the functional agent. Note that, during stirring, the top of the beaker was sealed with Saran Wrap®.

<Preparation of textile product for evaluation of desorption suppression rate>

1.7 kg of cotton fabric (Cotton 2003 (manufactured by Tanigashira Shoten)) was washed twice in a cumulative manner with a standard course of a fully automatic washing machine (manufactured by National, NA-F702P) (during washing, 4.7 g of EMULGEN 108 (manufactured by Kao Corporation), water amount 47 L, 9 minutes of washing, rinsing twice and 3 minutes of dewatering), then washed three times in a cumulative manner with water alone (water amount 47 L, 9 minutes of washing, rinsing twice and 3 minutes of dewatering), and dried for 24 hours in an environment at 23°C and 45%RH. Subsequently, the fabric was cut into a size of 6 cm × 6 cm, thus preparing a textile product for an evaluation.

<Laundry process>

A tergotometer (manufactured by Ueshima Seisakusho Co., Ltd.) was used for a laundry process. In a 1-liter stainless beaker, 0.6 L of water was placed, and 1 g of each detergent composition shown in Tables 2 and 3 was added. Subsequently, 30 g of the prepared textile product for an evaluation was put thereinto, and subjected to a washing process under the conditions of 85 rpm and 10 minutes while water temperature was kept at 20°C. After washing, the treated textile product was subjected to a dewatering process for 1 minute in a twin tub washing machine manufactured by Hitachi, Ltd. (model umber "PS-H35L"). After dewatering, five pieces of the textile product for an evaluation were sampled (hereinafter referred to as a post-washing sample), and then, the remainder were placed in a stainless beaker containing 0.6 L of water again, and subjected to a rinsing process under the conditions of 85 rpm and 10 minutes while water temperature was kept at 20°C. After rinsing, the treated textile product was subjected to a dewatering process for 2 minutes in the twin tub washing machine again. After dewatering, five pieces of the textile product for an evaluation were sampled (hereinafter referred to as a post-rinsing sample).

<Extraction process>

In a screw tube bottle No. 8 (Maruemu Corporation), the five pieces of the post-washing sample or the five pieces of the post-rinsing sample sampled in the above laundry process were placed, and then, 100 mL of acetone (special grade reagent, manufactured by FUJIFILM Wako Pure Chemical Corporation) containing 10 μg/mL of benzyl benzoate was added as an internal standard. This screw tube bottle was subjected to 1 hour of an extraction operation with an ultrasonic cleaner (BRANSON 2800, using an ice bath), followed by 15 minutes of an extraction operation with a shaker (manufactured by Yamato Scientific co., ltd., Shaker SA-300, speed: Max), and further 1 hour of an extraction operation with the above ultrasonic cleaner (under the same conditions) again, such that fragrance components remaining on the fabric were extracted into acetone.

<Quantification of fragrance remaining on textile product>

The amount of fragrances contained in the above acetone extraction liquid was quantified by gas chromatography using the measurement instrument and measurement conditions below, and the adsorption rate of fragrances remaining on the textile product was calculated for the post-washing sample or the post-rinsing sample from all the fragrances contained in the acetone extraction liquid.

[Measurement instrument]

GC device: "Agilent Technologies 7890B" (manufactured by Agilent Technologies, Inc.)
MS device: "Agilent Technologies 5977A" (manufactured by Agilent Technologies, Inc.)
Column: DB-WAX (length: 30 m, inner diameter: 0.25 mm, film thickness: 0.25 um, manufactured by Agilent Technologies, Inc.)
Injection inlet temperature: 240°C
Injection method: splitless
Injection volume: 1 μl
Temperature: 40°C -> the temperature was increased at 12.5°C/min -> 240°C (14min)
Carrier gas: helium
Average linear velocity 51 cm/min
MS temperature: ion source 230°C
Quadrupole temperature 150°C
Ionization method: EI
Import mode: SIM

<Calculation of desorption suppression rate>

The rate of suppressing the desorption of silica capsules enclosing the fragrance during rinsing of the textile product was calculated by the formula below from the adsorption rates of fragrances remaining on the textile product for the post-washing sample and the post-rinsing sample. The results are shown in Tables 2 and 3. The higher the desorption suppression rate, the more excellent the ability to suppress the desorption of silica capsules enclosing a functional agent from textile products during rinsing of the textile products.

Desorption suppression rate (%) = (adsorption rate of fragrance in post-rinsing sample) / (adsorption rate of fragrance in post-washing sample) $\times$ 100

[Table 2]

| | | | | | Example | | | | | | | | | |
|---|---|---|---|---|---|---|---|---|---|---|---|---|---|---|
| | | | | | 1 | 2 | 3 | 4 | 5 | 6 | 7 | 8 | 9 | 10 |
| Detergent composition | Formulation composition (mass%) | (A) | a-1 | Silica capsule (1) enclosing fragrance | 1 | 1 | 1 | 1 | 1 | 1 | 0.2 | 0.25 | 0.3 | 0.3 |
| | | | a-2 | Silica capsule (2) enclosing fragrance | | | | | | | | | | |
| | | (B) | b-1 | Cationized hydroxyethyl cellulose | 0.03 | | | | | | | | | |
| | | | b-2 | Alkylated cationized hydroxyethyl cellulose (1) | | 0.03 | | | | | | | | |
| | | | b-3 | Alkylated cationized hydroxyethyl cellulose (2) | | | 0.03 | | | | | | | |
| | | | b-4 | Dimethyl diallyl ammonium chloride/acrylamide copolymer (1) | | | | 0.03 | | | | | | |
| | | | b-5 | Dimethyl diallyl ammonium chloride/acrylamide copolymer (2) | | | | | 0.03 | | 0.006 | 0.008 | 0.004 | 0.006 |
| | | | b-6 | Dimethyl diallyl ammonium chloride polymer | | | | | | 0.03 | | | | |
| | | (B') | b'-1 | Hydroxyethyl cellulose (1) | | | | | | | | | | |
| | | | b'-2 | Hydroxyethyl cellulose (2) | | | | | | | | | | |
| | | | b'-3 | Alkylbenzyldimethylammonium chloride | | | | | | | | | | |
| | | (C) | c-1 | C18IOS | 5 | 5 | 5 | 5 | 5 | 5 | 5 | 5 | 5 | 5 |
| | | | c-2 | C12EO9PO2EO9 | 7.5 | 7.5 | 7.5 | 7.5 | 7.5 | 7.5 | 7.5 | 7.5 | 7.5 | 7.5 |
| | | | c-3 | C12EO10 | 7.5 | 7.5 | 7.5 | 7.5 | 7.5 | 7.5 | 7.5 | 7.5 | 7.5 | 7.5 |
| | | (D) | d-1 | Propylene glycol | 10 | 10 | 10 | 10 | 10 | 10 | 10 | 10 | 10 | 10 |
| | | | d-2 | Diethylene glycol monobutyl ether | 2 | 2 | 2 | 2 | 2 | 2 | 2 | 2 | 2 | 2 |
| | | (E) | e-1 | Citric acid | 0.3 | 0.3 | 0.3 | 0.3 | 0.3 | 0.3 | 0.3 | 0.3 | 0.3 | 0.3 |
| | | | e-1 | Monoethanolamine | 0.2 | 0.2 | 0.2 | 0.2 | 0.2 | 0.2 | 0.2 | 0.2 | 0.2 | 0.2 |
| | | (F) | f-1 | Hydrogenated castor oil | 0.2 | 0.2 | 0.2 | 0.2 | 0.2 | 0.2 | 0.2 | 0.2 | 0.2 | 0.2 |
| | | | f-2 | Anti-foaming agent | 0.3 | 0.3 | 0.3 | 0.3 | 0.3 | 0.3 | 0.3 | 0.3 | 0.3 | 0.3 |
| | | Water | | | Balance | Balance | Balance | Balance | Balance | Balance | Balance | Balance | Balance | Balance |
| | | Total | | | 100 | 100 | 100 | 100 | 100 | 100 | 100 | 100 | 100 | 100 |
| | (A)/(B) (mass ratio) | | | | 33.3 | 33.3 | 33.3 | 33.3 | 33.3 | 33.3 | 33.3 | 31.3 | 75.0 | 50.0 |
| | (C)/(A) (mass ratio) | | | | 20.0 | 20.0 | 20.0 | 20.0 | 20.0 | 20.0 | 100.0 | 80.0 | 66.7 | 66.7 |
| Evaluation | Desorption suppression rate (%) | | | | 55 | 32 | 41 | 45 | 74 | 50 | 66 | 73 | 70 | 70 |

[Table 3]

| | | | | Example | | | Comparative example | | | | | |
|---|---|---|---|---|---|---|---|---|---|---|---|---|
| | | | | 11 | 12 | 13 | 1 | 2 | 3 | 4 | 5 | 6 |
| Detergent composition | Formulation composition (mass%) | (A) | a-1 Silica capsule (1) enclosing fragrance | 0.3 | 0.3 | | 1 | 0.3 | 1 | 1 | | 1 |
| | | | a-2 Silica capsule (2) enclosing fragrance | | | 1 | | | | | 1 | |
| | | (B) | b-1 Cationized hydroxyethyl cellulose | | | | | | | | | |
| | | | b-2 Alkylated cationized hydroxyethyl cellulose (1) | | | | | | | | | |
| | | | b-3 Alkylated cationized hydroxyethyl cellulose (2) | | | | | | | | | |
| | | | b-4 Dimethyl diallyl ammonium chloride/acrylamide copolymer (1) | | | | | | | | | |
| | | | b-5 Dimethyl diallyl ammonium chloride/acrylamide copolymer (2) | 0.008 | 0.010 | 0.03 | | | | | | |
| | | | b-6 Dimethyl diallyl ammonium chloride polymer | | | | | | | | | |
| | | (B') | b'-1 Hydroxyethyl cellulose (1) | | | | | | 0.03 | | | |
| | | | b'-2 Hydroxyethyl cellulose (2) | | | | | | | 0.03 | | |
| | | | b'-3 Alkylbenzyldimethylammonium chloride | | | | | | | | | 0.03 |
| | | (C) | c-1 C18IOS | 5 | 5 | 5 | 5 | 5 | 5 | 5 | 5 | 5 |
| | | | c-2 C12EO9PO2EO9 | 7.5 | 7.5 | 7.5 | 7.5 | 7.5 | 7.5 | 7.5 | 7.5 | 7.5 |
| | | | c-3 C12EO10 | 7.5 | 7.5 | 7.5 | 7.5 | 7.5 | 7.5 | 7.5 | 7.5 | 7.5 |
| | | (D) | d-1 Propylene glycol | 10 | 10 | 10 | 10 | 10 | 10 | 10 | 10 | 10 |
| | | | d-2 Diethylene glycol monobutyl ether | 2 | 2 | 2 | 2 | 2 | 2 | 2 | 2 | 2 |
| | | (E) | e-1 Citric acid | 0.3 | 0.3 | 0.3 | 0.3 | 0.3 | 0.3 | 0.3 | 0.3 | 0.3 |
| | | | e-1 Monoethanolamine | 0.2 | 0.2 | 0.2 | 0.2 | 0.2 | 0.2 | 0.2 | 0.2 | 0.2 |
| | | (F) | f-1 Hydrogenated castor oil | 0.2 | 0.2 | 0.2 | 0.2 | 0.2 | 0.2 | 0.2 | 0.2 | 0.2 |
| | | | f-2 Anti-foaming agent | 0.3 | 0.3 | 0.3 | 0.3 | 0.3 | 0.3 | 0.3 | 0.3 | 0.3 |
| | | | Water | Balance | Balance | Balance | Balance | Balance | Balance | Balance | Balance | Balance |
| | | | Total | 100 | 100 | 100 | 100 | 100 | 100 | 100 | 100 | 100 |
| | | | (A)/(B) (mass ratio) | 37.5 | 30.0 | 33.3 | - | - | - | - | - | - |
| | | | (C)/(A) (mass ratio) | 66.7 | 66.7 | 20.0 | 20.0 | 66.7 | 20.0 | 20.0 | 20.0 | 20.0 |
| Evaluation | | | Desorption suppression rate (%) | 71 | 73 | 81 | 20 | 23 | 25 | 23 | 27 | 28 |

## Claims

**1.** A detergent composition comprising the following components (A) and (B) and water,

component (A): a silica capsule enclosing a functional agent, and
component (B): a cationic polymer (excluding those enclosed in the silica capsule of the component (A)).

**2.** The detergent composition according to claim 1, wherein the functional agent of the component (A) is one or more selected from a fragrance, a fragrance precursor, an oil agent, an antioxidant, a cooling sensation agent, a warming sensation agent, an antibacterial agent, a dye, a colorant, an ultraviolet absorber, a silicone, a solvent and an oil-soluble polymer.

**3.** The detergent composition according to claim 1 or 2, wherein the component (B) is one or more selected from (B1) a polysaccharide derivative having a cation group and (B2) a cationic polymer obtained by polymerizing an unsaturated monomer having a cation group.

**4.** The detergent composition according to any one of claims 1 to 3, wherein a weight average molecular weight of the component (B) is 1,000,000 or more and 5,000,000 or less.

**5.** The detergent composition according to any one of claims 1 to 4, wherein a mass ratio of a content of the component (A) in terms of the enclosed functional agent to a content of the component (B), (A)/(B), is 20 or more and 100 or less.

**6.** The detergent composition according to any one of claims 1 to 5, further comprising the following component (C), component (C): a surfactant.

**7.** The detergent composition according to claim 6, wherein the component (C) is one or more surfactants selected from (C1) an anionic surfactant and (C2) a nonionic surfactant.

**8.** The detergent composition according to claim 6 or 7, wherein a mass ratio of a content of the component (C) to a content of the component (A) in terms of the enclosed functional agent, (C)/(A), is 20 or more and 200 or less.

**9.** The detergent composition according to any one of claims 1 to 8, wherein the composition is used for textile products.

**10.** A method for washing a textile product comprising, washing the textile product using a washing liquid obtained by mixing the detergent composition according to any one of claims 1 to 9 with water, and thereafter rinsing the textile product with water.

**11.** A kit for a washing liquid comprising, a first agent containing the following component (A) and a second agent containing the following component (B),

component (A): a silica capsule enclosing a functional agent, and
component (B): a cationic polymer (excluding those enclosed in the silica capsule of the component (A)).

**12.** A method for producing a detergent composition comprising, mixing the following components (A) and (B) with water,

component (A): a silica capsule enclosing a functional agent, and
component (B): a cationic polymer (excluding those enclosed in the silica capsule of the component (A)).

**INTERNATIONAL SEARCH REPORT**

International application No. **PCT/JP2022/043647**

**A. CLASSIFICATION OF SUBJECT MATTER**

***C11D 17/08***(2006.01)i; ***C11D 3/37***(2006.01)i; ***C11D 9/22***(2006.01)i; ***C11D 9/44***(2006.01)i
FI: C11D17/08; C11D9/22; C11D9/44; C11D3/37

According to International Patent Classification (IPC) or to both national classification and IPC

**B. FIELDS SEARCHED**

Minimum documentation searched (classification system followed by classification symbols)

C11D17/08; C11D3/37; C11D9/22; C11D9/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-535731 A (APPVION, INC.) 17 December 2015 (2015-12-17) claims 1, 8-9, paragraph [0072], examples 3, 7, 8, tables 3A, 7, 8A-8C | 1-12 |
| X | JP 2017-528513 A (FIRMENICH SA) 28 September 2017 (2017-09-28) claims 7-8, 12-15, paragraphs [0007], [0040]-[0042], examples 1-11, tables 1-3 | 1-12 |
| X<br>A | JP 2011-529392 A (SOL-GEL TECHNOLOGIES LTD.) 08 December 2011 (2011-12-08) claims 7, 13, 16, paragraphs [0053], [0056], examples 21-24 | 1-8, 11-12<br>9-10 |
| A | JP 2021-517112 A (FIRMENICH SA) 15 July 2021 (2021-07-15) claim 1, paragraph [0001] | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 February 2023** | **21 February 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/043647**

| Patent document cited in search report | Publication date (day/month/year) | Patent family member(s) | Publication date (day/month/year) |
|---|---|---|---|
| JP 2015-535731 A | 17 December 2015 | US 2014/0079747 A1<br>claims 1, 7-8, paragraph [0081], examples 3, 7, 8, tables 3A, 7, 8A-8C<br>WO 2014/047486 A2<br>EP 2897578 A1<br>CA 2881393 A1<br>AU 2013317851 A1<br>MX 2015003631 A<br>CN 105050705 A<br>AR 92643 A1<br>BR 112015006100 A2 | |
| JP 2017-528513 A | 28 September 2017 | US 2017/0137757 A1<br>claims 7-8, 12-18, paragraphs [0007], [0056]-[0058], examples 1-11, tables 1-3<br>WO 2015/197757 A1<br>EP 3161120 A1<br>CN 106456506 A<br>MX 2016016114 A<br>BR 112016029721 A2<br>ZA 201608772 B | |
| JP 2011-529392 A | 08 December 2011 | US 2011/0177951 A1<br>claim 52, paragraphs [0084], [0087], examples 21-24<br>WO 2010/013250 A2<br>EP 2307129 A2<br>AU 2009277962 A1<br>CA 2732368 A1<br>CN 102112219 A<br>MX 2011000682 A<br>IL 210430 D<br>KR 10-2011-0084151 A<br>EA 201170271 A1<br>BR PI0916820 A2<br>ZA 201101504 B | |
| JP 2021-517112 A | 15 July 2021 | US 2021/0008518 A1<br>claim 1, paragraph [0001]<br>WO 2019/185553 A1<br>EP 3774016 A1<br>CN 111886070 A<br>SG 11202006476V A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015128762 A
- JP 2009504812 A
- JP 2011517323 A
- JP 2017114802 A
- JP H6316700 A

### Non-patent literature cited in the description

- **A. LEO.** Comprehensive Medicinal Chemistry. Pergamon Press, 1990, vol. 4, 295